# EUROPEAN PATENT APPLICATION

(11) **EP 4 471 560 A1**
(43) Date of publication of application: **04.12.2024**
(21) Application number: 23755763.2
(22) Date of filing: 14.02.2023
(51) Int. Cl.: G06F 3/0483

(54) **METHOD FOR IMPLEMENTING COLLECTION FUNCTION OF BROWSER, AND READABLE MEDIUM AND ELECTRONIC DEVICE**

(30) Priority: 18.02.2022 CN 202210152026
(71) Applicant: Huawei Cloud Computing Technologies Co., Ltd., Guiyang, Guizhou 550025 (CN)
(72) Inventor: TANG, Jianhua, Guiyang, Guizhou 550025 (CN)
(74) Representative: Körber, Martin Hans
(86) International application number: PCT/CN2023/075828
(87) International publication number: WO 2023/155761

(57) **Abstract**

This application relates to a method for implementing a favorites function of a browser, a readable medium, and an electronic device. The method includes: detecting a favorites selection operation of a user, where a favorites object selected by the favorites selection operation is at least partial displayed content on a tab currently displayed on the browser; storing related data of the at least partial displayed content in response to the favorites selection operation, where the related data is used to display the at least partial displayed content; and displaying a favorites tab in response to a view operation of the user, where the at least partial displayed content is displayed on the favorites tab. In the technical solutions of this application, partial resources in which the user is interested on the tab of the browser can be added to favorites, to meet a requirement of the user for adding the partial resources on the tab of the browser to favorites. The favorites tab intuitively displays a plurality of resources that are added to favorites, to help the user quickly find resources in which the user is interested on the favorites tab and improve use experience when the user uses the favorites function of the browser.

## Description

This application claims priority to Chinese Patent Application No. 202210152026.2, filed with the China National Intellectual Property Administration on February 18, 2022 and entitled "METHOD FOR IMPLEMENTING FAVORITES FUNCTION OF BROWSER, READABLE MEDIUM, AND ELECTRONIC DEVICE", which is incorporated herein by reference in its entirety.

### TECHNICAL FIELD

This application relates to the field of computer technologies, and in particular, to a method for implementing a favorites function of a browser, a readable medium, and an electronic device.

### BACKGROUND

As Internet content becomes increasingly rich, a browser may display a plurality of resources such as a text, an image, a video, and an audio download from a web page server. There are more cases in which a user uses the browser to access the Internet to browse content in which the user is interested. For example, the user searches for a meaning of a technical term, watches a video, listens to a song, searches for lyrics, and reads a novel through the browser.

Some of these web pages are web pages in which the user is interested and hopes to access again in the future. Usually, browsers such as IE^{™} and Chrome^{™} allow the user to add these web pages to favorites folders of the browser. In this way, after the user opens the browser next time, the user does not need to manually input uniform resource locators (URL, Uniform Resource Locators) of these web pages that have been added to favorites or find a web page in which the user is interested by using a search engine, but can directly access these web pages by using the favorites folders. Introduction of the favorites folders greatly facilitates an operation of accessing a specific website by the user, but there are still some problems.

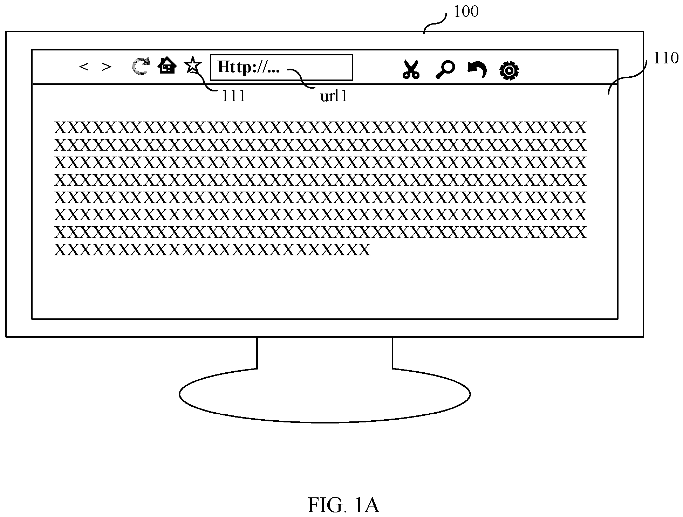

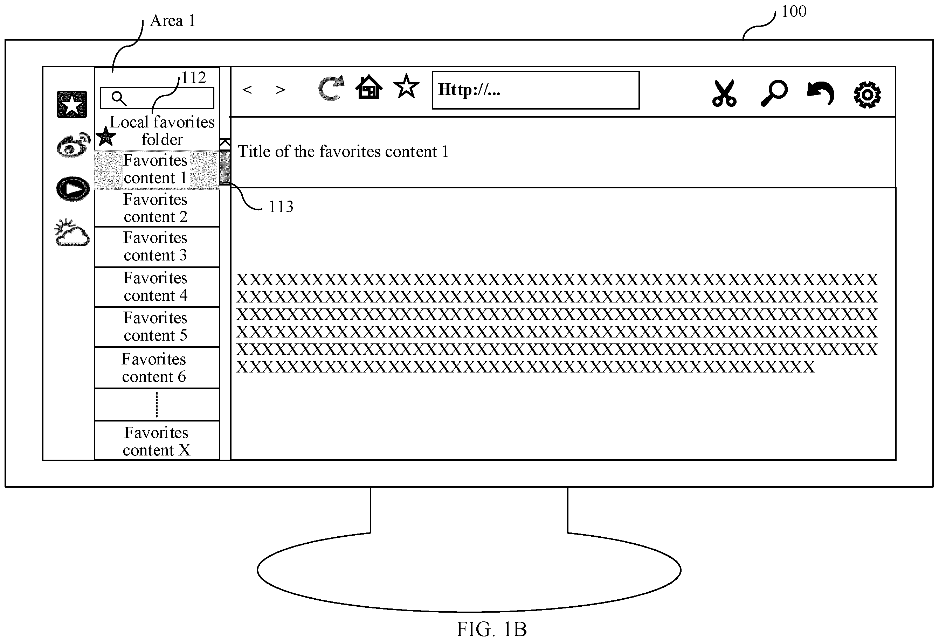

For example, some existing browsers usually add all content of a web page selected by the user to favorites, but in some cases, the user is interested in only partial content of the web page. However, the existing browsers cannot implement a function of adding the partial content of the web page to favorites, and cannot meet a requirement of the user for adding partial resources in the web page to favorites. For example, content corresponding to a web page whose website address is url1 is displayed in a display interface 110 of a browser of a computer 100 shown in FIG. 1A. After the user taps a favorites control 111, the browser adds url1 corresponding to all content of the web page to a local favorites folder 112 shown in FIG. 1B, and a name is "favorites content 1", but cannot add partial content of the web page to favorites.

For another example, in some existing browsers, names of web pages that are added to favorites in a favorites folder are sequentially arranged in a list form from top to bottom. The favorites folder occupies less space in a display interface of the browser, and a layout is inappropriate. When there is a large amount of content that is added to favorites, it is difficult for the user to quickly find content in which the user is interested from the favorites folder. As a result, search efficiency is low. For example, in the local favorites folder 112 of the browser shown in FIG. 1B, the local favorites folder 112 is located in a narrow area 1 on a left side in the display interface of the browser. Names of web pages added by the browser to favorites, for example, favorites content 1 to X in the figure, can only be sequentially displayed in the list form from top to bottom. When the user needs to search for specific content from a large amount of content added to favorites in the local favorites folder 112, the user needs to drag a control 113 to search the large amount of content added to favorites in the local favorites folder 112 one by one with naked eyes. This layout manner of the favorites folder is not conducive to the user to quickly find target content, and user experience is poor.

### SUMMARY

In view of this, embodiments of this application provide a method for implementing a favorites function of a browser, a readable medium, and an electronic device. In the technical solutions of this application, when a favorites selection operation of a user is detected, related data of a favorites object (at least partial displayed content on a tab currently displayed on the browser) selected by the favorites selection operation is stored, and a favorites tab is displayed in response to a view operation of the user, where the at least partial displayed content is displayed on the favorites tab. Therefore, an electronic device is enabled to add, based on a requirement of the user, partial resources in which the user is interested on the tab of the browser to favorites, to meet the requirement of the user for adding the partial resources on the tab of the browser to favorites. In addition, the favorites tab intuitively displays a plurality of resources that are added to favorites, to help the user quickly find resources in which the user is interested in the plurality of resources displayed on the favorites tab, so as to improve use experience when the user uses the favorites function of the browser.

According to a first aspect, this application provides a method for implementing a favorites function of a browser, applied to an electronic device on which the browser is installed. The method includes:
detecting a favorites selection operation of a user, where a favorites object selected by the favorites selection operation is at least partial displayed content on a tab currently displayed on the browser;
storing related data of the at least partial displayed content in response to the favorites selection operation, where the related data is used to display the at least partial displayed content; and
displaying a favorites tab in response to a view operation of the user, where the at least partial displayed content is displayed on the favorites tab.

When the favorites selection operation of the user is detected, the related data of the favorites object (the at least partial displayed content on the tab currently displayed on the browser) selected by the favorites selection operation is stored, and the favorites tab is displayed in response to the view operation of the user, where the at least partial displayed content is displayed on the favorites tab. Therefore, an electronic device is enabled to add, based on a requirement of the user, partial resources in which the user is interested on the tab of the browser to favorites, to meet the requirement of the user for adding the partial resources on the tab of the browser to favorites. In addition, the favorites tab intuitively displays a plurality of resources that are added to favorites, to help the user quickly find resources in which the user is interested in the plurality of resources displayed on the favorites tab, so as to improve use experience when the user uses the favorites function of the browser.

According to the first aspect, in a possible implementation of the first aspect, the storing related data of the at least partial displayed content in response to the favorites selection operation includes:
in response to the favorites selection operation, determining the related data of the at least partial displayed content that is selected by the user to add to favorites;
storing the related data of the at least partial displayed content as a resource package corresponding to the at least partial displayed content;
determining a storage path of the resource package corresponding to the at least partial displayed content and a name of the resource package; and
storing the storage path of the resource package corresponding to the at least partial displayed content and the name of the resource package.

Therefore, when it is determined that the partial displayed content needs to be displayed, the related data of the at least partial displayed content is obtained based on the stored storage path of the resource package and the stored name of the resource package, so that the at least partial displayed content is displayed on the favorites tab based on the obtained related data of the at least partial displayed content.

According to the first aspect, in a possible implementation of the first aspect, the method further includes:
in response to the favorites selection operation, determining a basic parameter corresponding to the at least partial displayed content that is selected by the user to add to favorites, where the basic parameter is for describing a favorites type corresponding to the at least partial displayed content and at least one of location information and size information of the at least partial displayed content when the at least partial displayed content is displayed on the favorites tab; and
storing the basic parameter corresponding to the at least partial displayed content.

Therefore, when it is determined that the partial displayed content needs to be displayed, the favorites type corresponding to the partial displayed content is determined based on the stored basic parameter. When it is determined, based on the favorites type, that the partial displayed content needs to be added to favorites and displayed, the location information and the size information of the at least partial displayed content when being displayed on the favorites tab are determined based on the stored basic parameter, to display the partial displayed content of a corresponding size at a corresponding location on the favorites tab.

According to the first aspect, in a possible implementation of the first aspect, the basic parameter includes a favorites type parameter corresponding to the at least partial displayed content; and
the displaying a favorites tab in response to a view operation of the user includes:
in response to the view operation of the user, obtaining the stored storage path of the resource package corresponding to the at least partial displayed content, the stored name of the resource package, and the stored basic parameter corresponding to the partial displayed content; and
when it is determined, based on the obtained basic parameter corresponding to the partial displayed content, that the partial displayed content needs to be added to favorites and displayed, displaying the favorites tab based on the storage path of the resource package corresponding to the at least partial displayed content, the name of the resource package, and the basic parameter corresponding to the partial displayed content.

According to the first aspect, in a possible implementation of the first aspect, the basic parameter further includes a location parameter and a size parameter that correspond to the at least partial displayed content; and
the displaying the favorites tab based on the storage path of the resource package corresponding to the at least partial displayed content, the name of the resource package, and the basic parameter corresponding to the partial displayed content includes:
determining, based on the basic parameter corresponding to the partial displayed content, a first location and a first size of the at least partial displayed content on the favorites tab when the at least partial displayed content is displayed on the favorites tab;
finding the related data of the at least partial displayed content based on the storage path of the resource package and the name of the resource package; and
displaying the at least partial displayed content at the first location of the favorites tab based on the found related data of the at least partial displayed content, where a size of the partial displayed content displayed on the favorites tab is the first size.

According to the first aspect, in a possible implementation of the first aspect, the method further includes:
in response to a movement operation of the user, moving the at least partial displayed content displayed on the favorites tab from the first location to a second location. In this way, the user can adjust locations of favorites content on the favorites tab based on a requirement of the user, to improve user experience.

According to the first aspect, in a possible implementation of the first aspect, the method further includes:
in response to a scaling operation of the user, adjusting the at least partial displayed content displayed on the favorites tab from the first size to a second size, so that the user can adjust sizes of favorites content on the favorites tab based on the requirement of the user, to improve user experience.

According to the first aspect, in a possible implementation of the first aspect, the method further includes:
in response to a hiding operation of the user, hiding the at least partial displayed content displayed on the favorites tab, so that the user can hide some favorites content on the favorites tab based on the requirement of the user, or redisplay some hidden content on the favorites tab for processing, to meet different requirements of the user.

According to the first aspect, in a possible implementation of the first aspect, the related data of the at least partial displayed content includes:
the at least partial displayed content or a uniform resource locator corresponding to the at least partial displayed content.

According to the first aspect, in a possible implementation of the first aspect, the related data of the at least partial displayed content further includes:
a display style file of the at least partial displayed content and/or a script file of the at least partial displayed content, where
the display style file of the at least partial displayed content is for describing a display style of the at least partial displayed content on the currently displayed tab; and
the script file of the at least partial displayed content is for describing operation logic of the at least partial displayed content on the currently displayed tab.

According to the first aspect, in a possible implementation of the first aspect, the at least partial displayed content includes one or more of a video, an audio, a picture, or a text.

According to a second aspect, this application provides an apparatus for implementing a favorites function of a browser, including:
a detecting module, configured to detect a favorites selection operation of a user, where a favorites object selected by the favorites selection operation is at least partial displayed content on a tab currently displayed on the browser;
a first response module, configured to store related data of the at least partial displayed content in response to the favorites selection operation, where the related data is used to display the at least partial displayed content; and
a second response module, configured to display a favorites tab in response to a view operation of the user, where the at least partial displayed content is displayed on the favorites tab.

According to the second aspect, in a possible implementation of the second aspect, the first response module stores the related data of the at least partial displayed content in response to the favorites selection operation in the following manner:
in response to the favorites selection operation, determining the related data of the at least partial displayed content that is selected by the user to add to favorites;
storing the related data of the at least partial displayed content as a resource package corresponding to the at least partial displayed content;
determining a storage path of the resource package corresponding to the at least partial displayed content and a name of the resource package; and
storing the storage path of the resource package corresponding to the at least partial displayed content and the name of the resource package.

According to the second aspect, in a possible implementation of the second aspect, the apparatus further includes:
a third response module, configured to: in response to the favorites selection operation, determine a basic parameter corresponding to the at least partial displayed content that is selected by the user to add to favorites, where the basic parameter is for describing a favorites type corresponding to the at least partial displayed content and at least one of location information and size information of the at least partial displayed content when the at least partial displayed content is displayed on the favorites tab; and
store the basic parameter corresponding to the at least partial displayed content.

According to the second aspect, in a possible implementation of the second aspect, the basic parameter includes a favorites type parameter corresponding to the at least partial displayed content; and
the second response module displays the favorites tab in response to the view operation of the user in the following manner:
in response to the view operation of the user, obtaining the stored storage path of the resource package corresponding to the at least partial displayed content, the stored name of the resource package, and the stored basic parameter corresponding to the partial displayed content; and
when it is determined, based on the obtained basic parameter corresponding to the partial displayed content, the partial displayed content needs to be added to favorites and displayed, displaying the favorites tab based on the storage path of the resource package corresponding to the at least partial displayed content, the name of the resource package, and the basic parameter corresponding to the partial displayed content.

According to the second aspect, in a possible implementation of the second aspect, the basic parameter further includes a location parameter and a size parameter that correspond to the at least partial displayed content; and
the second response module displays the favorites tab based on the storage path of the resource package corresponding to the at least partial displayed content, the name of the resource package, and the basic parameter corresponding to the partial displayed content in the following manner:
determining, based on the basic parameter corresponding to the partial displayed content, a first location and a first size of the at least partial displayed content on the favorites tab when the at least partial displayed content is displayed on the favorites tab;
finding the related data of the at least partial displayed content based on the storage path of the resource package and the name of the resource package; and
displaying the at least partial displayed content at the first location of the favorites tab based on the found related data of the at least partial displayed content, where a size of the partial displayed content displayed on the favorites tab is the first size.

According to the second aspect, in a possible implementation of the second aspect, the apparatus further includes:
a fourth response module, configured to: in response to a movement operation of the user, move the at least partial displayed content displayed on the favorites tab from the first location to a second location.

According to the second aspect, in a possible implementation of the second aspect, the apparatus further includes:
a fifth response module, configured to: in response to a scaling operation of the user, adjust the at least partial displayed content displayed on the favorites tab from the first size to a second size.

According to the second aspect, in a possible implementation of the second aspect, the apparatus further includes:
a sixth response module, configured to: in response to a hiding operation of the user, hide the at least partial displayed content displayed on the favorites tab.

According to the second aspect, in a possible implementation of the second aspect, the related data of the at least partial displayed content includes:
the at least partial displayed content or a uniform resource locator corresponding to the at least partial displayed content.

According to the second aspect, in a possible implementation of the second aspect, the related data of the at least partial displayed content further includes:
a display style file of the at least partial displayed content and/or a script file of the at least partial displayed content, where
the display style file of the at least partial displayed content is for describing a display style of the at least partial displayed content on the currently displayed tab; and
the script file of the at least partial displayed content is for describing operation logic of the at least partial displayed content on the currently displayed tab.

According to the second aspect, in a possible implementation of the second aspect, the at least partial displayed content includes one or more of a video, an audio, a picture, or a text.

According to a third aspect, this application provides a computer-readable storage medium. The computer-readable storage medium stores instructions, and when the instructions are executed on an electronic device, the electronic device is enabled to perform the method for implementing a favorites function in any one of the first aspect and the possible implementations of the first aspect.

According to a fourth aspect, this application provides a computer program product. The computer program product includes instructions, and when the instructions are executed by one or more processors, the instructions are used to implement the method for implementing a favorites function in any one of the first aspect and the possible implementations of the first aspect.

According to a fifth aspect, this application provides an electronic device, including:
a memory, configured to store instructions; and
one or more processors, where when the instructions are executed by the one or more processors, the processor performs the method for implementing a favorites function in any one of the first aspect and the possible implementations of the first aspect.

### BRIEF DESCRIPTION OF DRAWINGS

FIG. 1A shows a schematic diagram of a display interface of a computer browser according to some embodiments of this application;
FIG. 1B shows a schematic diagram of an interface of a browser favorites folder according to some embodiments of this application;
FIG. 2A to FIG. 2I show schematic diagrams of some display interfaces of a browser according to some embodiments of this application;
FIG. 3 shows a block diagram of a hardware structure of a computer according to some embodiments of this application;
FIG. 4 shows a schematic diagram of a software architecture of a computer according to some embodiments of this application;
FIG. 5 shows a schematic flowchart of a method for implementing a favorites function of a browser according to some embodiments of this application;
FIG. 6A to FIG. 6C show schematic diagrams of some display interfaces of a browser according to some embodiments of this application;
FIG. 7 shows a schematic flowchart of another method for implementing a favorites function of a browser according to some embodiments of this application;
FIG. 8A and FIG. 8B show schematic diagrams of some display interfaces of a browser according to some embodiments of this application;
FIG. 9 shows a schematic flowchart of another method for implementing a favorites function of a browser according to some embodiments of this application;
FIG. 10A to FIG. 10D show schematic diagrams of some display interfaces of a browser according to some embodiments of this application; and
FIG. 11 shows a schematic flowchart of adding content on two different tabs of a browser to a favorites tab for parallel display according to some embodiments of this application.

### DESCRIPTION OF EMBODIMENTS

Illustrative embodiments of this application include but are not limited to one method for implementing a favorites function of a browser, a readable medium, and an electronic device.

For ease of understanding the technical solutions of this application, the following first briefly describes technical terms in some embodiments of this application.

A hypertext markup language (Hypertext Markup Language, HTML for short) is a standard markup language for creating a web page. The HTML is a basic technology that is often used to design a web page, a web application, and a user interface of a mobile application. A web browser may read an HTML file and render the HTML file into a visual web page.

A uniform resource locator (English: Uniform Resource Locator, URL for short, or referred to as a uniform resource locator, a location address or a URL address) is commonly referred to as a web page address, which is referred to as a website address for short. The uniform resource locator is an address (Address) of a standard resource on the Internet, which is similar to a doorplate on the network.

A cascading style sheet (Cascading Style Sheet, CSS for short) is a style sheet language for describing presentation of documents such as an HTML. The CSS describes how elements displayed on a screen should be rendered.

Iframe is an HTML tag, and is used for a document in a document or a floating framework. The <iframe> tag specifies an inline framework. The inline framework is used to embed another document in a current HTML document.

Grister is a front-end drag plug-in.

JavaScript is a lightweight, interpreted, or just-in-time compiled programming language with function-first.

To make the objectives, technical solutions, and advantages of this application clearer and more comprehensible, the following further describes this application in detail with reference to the accompanying drawings and embodiments. It should be understood that specific embodiments described herein are merely used to explain this application but are not intended to limit this application.

For example, in the background, some existing browsers only add complete content of a web page selected by a user to favorites, and a layout manner of a display interface of a favorites folder is inappropriate. This leads to a technical problem that the user has poor experience when using favorites functions of some existing browsers.

Therefore, an embodiment of this application provides a method for implementing a favorites function of a browser. Specifically, when an electronic device detects a favorites operation performed by the user on content of an area selected by the user on a tab currently displayed on the browser, in response to the favorites operation of the user, the electronic device stores, related data corresponding to the content of the area. The related data corresponding to the content of the area can be used to display the content of the area. In addition, the related data corresponding to the content of the area may include the content of the area (for example, a picture, a video, or a piece of text), or a URL corresponding to the content of the area, a display style file for describing a specific style (for example, a size of the text and a background color) of displaying the content of the area, and a script file for describing operation logic about the content of the area (for example, operation logic that the content of the area is selected by using a mouse, and a pop-up box is displayed by right-clicking the mouse) of displaying the content of the area.

In addition, when a view operation of the user is detected, for example, when an operation of switching, by the user, a current display page of the browser to a favorites tab of the browser by using the mouse is detected, the favorites tab of the browser is displayed, where the favorites tab displays the content that is selected by the user to add to favorites. The favorites tab is a tab that is of the browser and that is specially used to display a resource that is added to favorites.

Therefore, an electronic device is enabled to add, based on a requirement of the user, partial resources in which the user is interested on the tab of the browser to favorites, to meet the requirement of the user for adding the partial resources on the tab of the browser to favorites. In addition, the favorites tab intuitively displays a plurality of resources that are added to favorites, to help the user quickly find resources in which the user is interested in the plurality of resources displayed on the favorites tab, so as to improve use experience when the user uses the favorites function of the browser.

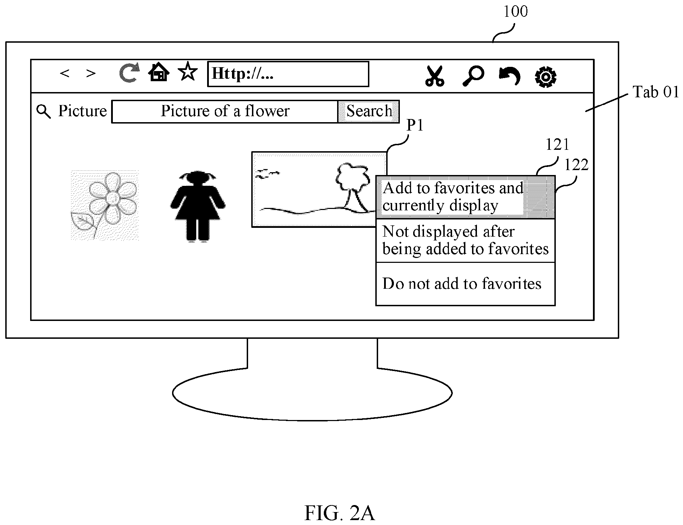

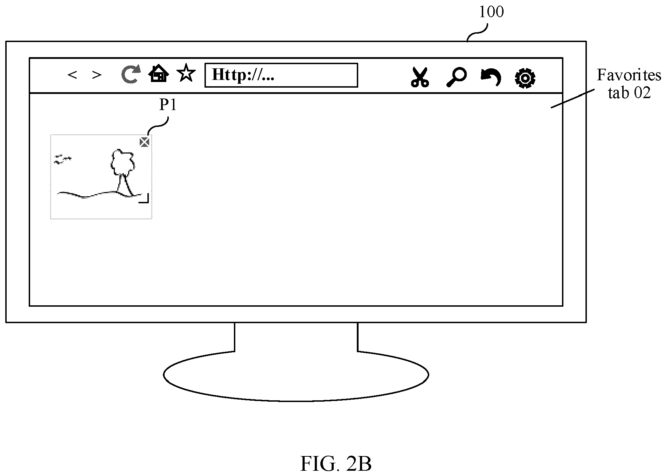

For example, in some embodiments, a plurality of pictures are displayed on a tab 01 of a browser installed on a computer 100 shown in FIG. 2A. After the user selects a landscape picture P1 by using a mouse and right-clicks the mouse, a favorites menu 121 pops up on the tab 01. After the user taps an "add to favorites and currently display" control 122 by using the mouse, the picture P1 is added to favorites on a favorites tab 02 shown in FIG. 2B. When the user switches, by using the mouse, a tab currently displayed on the browser from the tab 01 to the favorites tab, the computer 100 jumps to a user interface shown in FIG. 2B. Refer to FIG. 2B, the foregoing landscape picture P1 that is added to favorites is displayed, so that the user can intuitively view the picture P1 on the favorites tab 02.

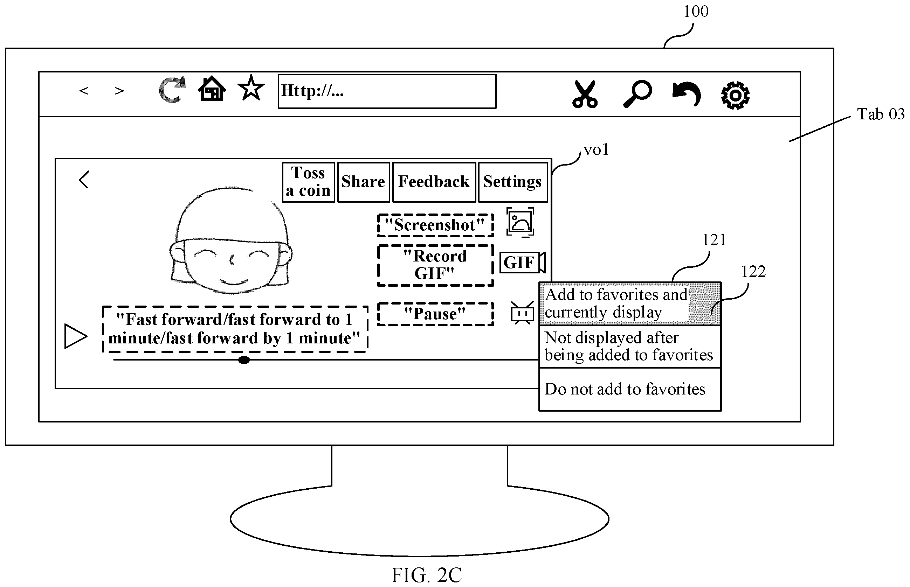

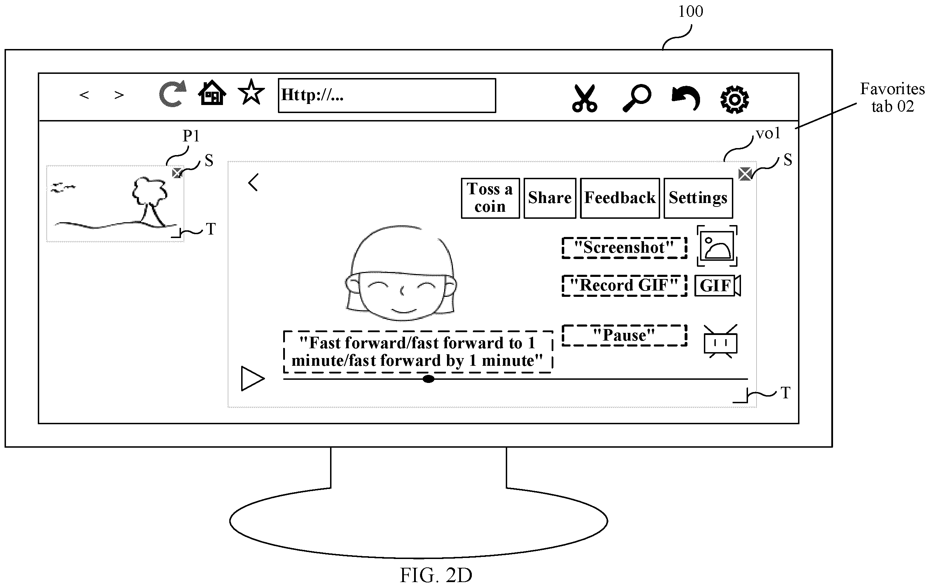

For another example, in some embodiments, a video vo1 is displayed on a tab 03 of the browser installed on the computer 100 shown in FIG. 2C. After the user selects the video vo1 by using the mouse and right-clicks the mouse, a favorites menu 121 pops up on the tab 03. After the user taps the "add to favorites and currently display" control 122 by using the mouse, the video vo1 is also added to the favorites tab 02 shown in FIG. 2D.

It should be noted that, after the video vo1 is added to favorites on the favorites tab 02, the browser still currently displays the tab 03 on which the video vo1 is located, and the browser displays the favorites tab 02 shown in FIG. 2D only when the user manually switches a display interface of the browser to the favorites tab 02.

In addition, the user may further customize a typesetting manner of the picture P1 and the video vo1 that are added to favorites on the favorites tab 02. For example, the user drags, by using the mouse, a control T in a lower right corner of the picture P1 or the video vo1 that is already added to favorites and displayed on the favorites tab 02 shown in FIG. 2D, to zoom in or zoom out a card area of the picture P1 or the video vo1. For another example, the user drags, by using the mouse, the picture P1 or the video vo1 that is added to favorites and displayed on the favorites tab 02 shown in FIG. 2D, to move the picture P1 or the video vo1 to another location on the favorites tab 02.

In addition, in some cases, when the user does not want to display the picture P1 or the video vo1 that is added to favorites and displayed on the favorites tab 02, the user may alternatively tap a control S in an upper right corner of the picture P1 or the video vo1 shown in FIG. 2D, to hide the picture P1 or the video vo1.

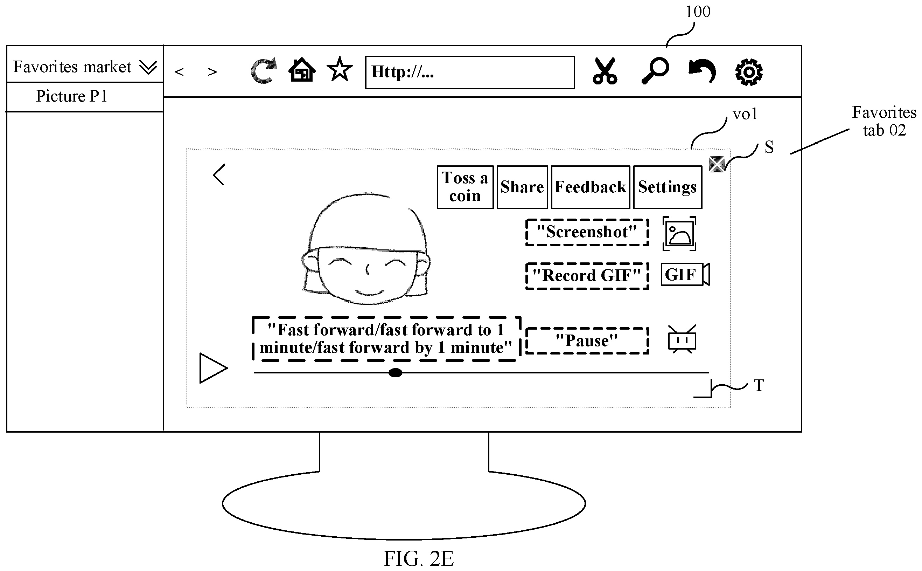

For example, the user taps the control S in the upper right corner of the picture P1 on the favorites tab 02 shown in FIG. 2D, and the favorites tab 02 shown in FIG. 2D jumps to a display status shown in FIG. 2E. Refer to FIG. 2E, the picture P1 is hidden, and only a name of the picture P1 is displayed in a favorites market on a left side of the favorites tab 02.

It may be understood that FIG. 2A to FIG. 2E show examples of some user interfaces in which the computer 100 performs the method for implementing a favorites function of a browser provided in some embodiments of this application, to add partial resources selected by the user on the tab of the browser to favorites and display the resources on the favorites tab 02. In some other embodiments, by performing the method for implementing a favorites function of a browser provided in some embodiments of this application, the computer 100 can also add all content on some tabs selected by the user to favorites, and display, on the favorites tab 02 of the browser in a card form based on the requirement of the user, all content on a tab that is added to favorites.

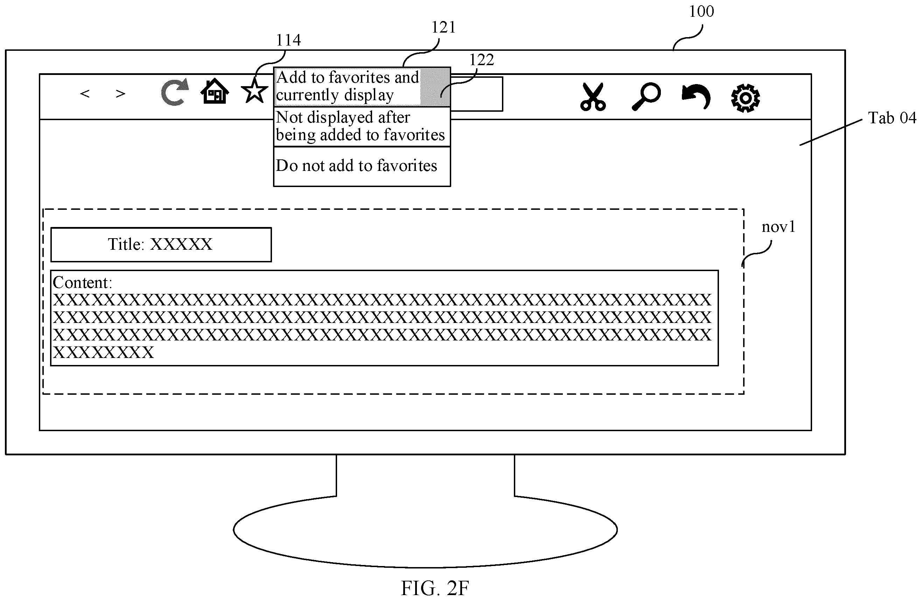

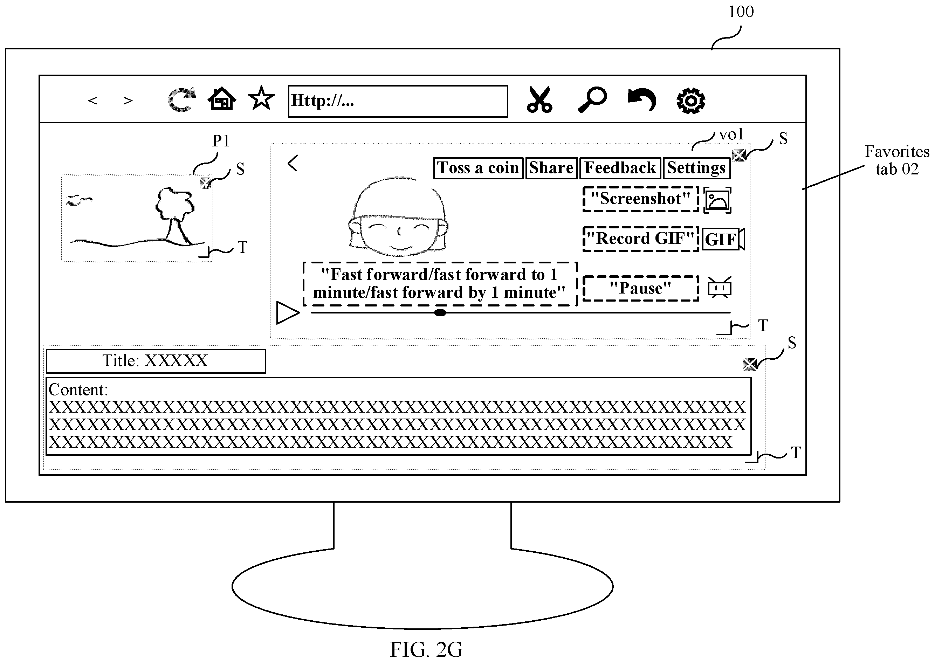

For example, in an embodiment shown in FIG. 2F, content currently displayed on a tab 04 is partial chapters of a novel nov1. The user taps a favorites control 114 on the tab 04 of the browser, and a favorites menu 121 pops up on the tab 04. After the user taps the "add to favorites and currently display" control 122 by using the mouse, the partial chapters of the novel nov1 displayed on the tab 04 are added to favorites on the favorites tab 02 shown in FIG. 2G, and the novel nov1, the video vo1, and the picture P1 are all intuitively displayed on the favorites tab 02. It should be noted that, after the partial chapters of the novel nov1 are added to favorites on the favorites tab 02, the browser still currently displays the tab 04 on which the partial chapters of the novel nov1 are located, and the browser displays the favorites tab 02 shown in FIG. 2G only when the user manually switches a display interface of the browser to the favorites tab 02. Similarly, the user may also perform operations such as zooming in, zooming out, and moving in a display interface of the novel nov1 displayed on the favorites tab 02.

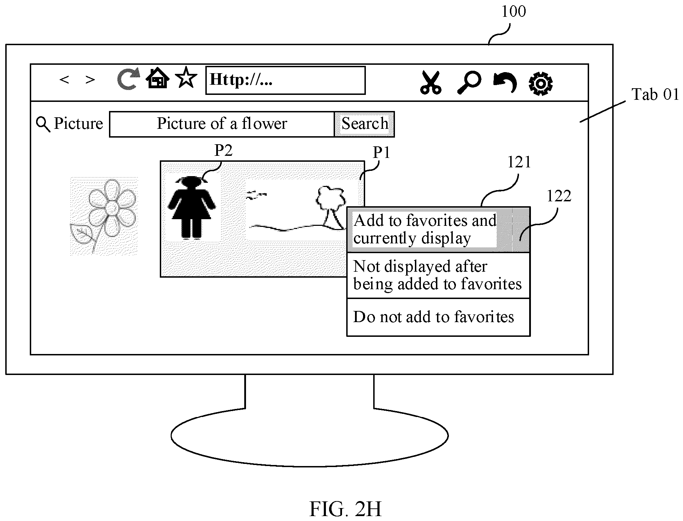

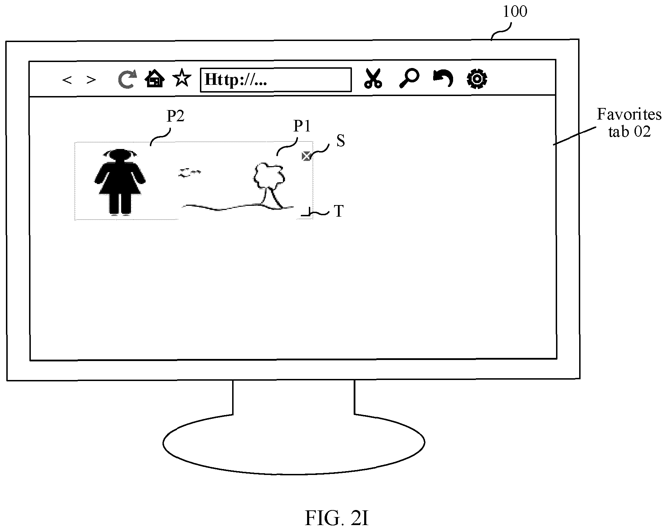

In addition, in some embodiments, the user may further simultaneously select a plurality of resources from the tab currently displayed on the browser to add to favorites. For example, in an embodiment shown in FIG. 2H, after the user selects the picture P1 and a picture P2 by using the mouse and right-clicks the mouse, the favorites menu 121 pops up on the tab 01. After the user taps the "add to favorites and currently display" control 122 by using the mouse, the picture P1 and the picture P2 are added to favorites on the favorites tab 02 shown in FIG. 2I. Similarly, the user may also perform operations such as zooming in, zooming out, and moving in a display interface of the picture P1 and the picture P2 displayed on the favorites tab 02.

It should be noted that specific implementation processes involved in the foregoing embodiments are described in detail below with reference to specific flowcharts. Details are not described herein.

It is not difficult to learn from the foregoing descriptions of embodiments shown in FIG. 2A to FIG. 2I that, by performing the method for implementing a favorites function of a browser provided in some embodiments of this application, the computer 100 may add partial resources selected by the user on a tab of the browser to favorites, to meet the requirement of the user for adding the partial resources on the tab to favorites. In addition, the computer 100 may further display a resource that is added to favorites by using a favorites tab specially used to display a favorites resource, so that the user can view and quickly find a favorites resource in which the user is interested. The user may further select, on the favorites tab, a favorites resource that does not need to be displayed, and customize a size, a location, and the like of an area occupied by each favorites resource displayed on the favorites tab, to improve use experience when the user uses the favorites function of the browser.

In addition, in the foregoing embodiments, the browser installed on the computer 100 is used as an example to describe the technical solutions of this application. It may be understood that the technical solutions of this application are implemented by any electronic device that has a display screen and that can run an executable program of a browser, including but not limited to a mobile phone, a tablet computer, a laptop computer, a server, a wearable device, a head-mounted display, a mobile email device, a head unit device, a portable game console, a portable music player, a reader device, a television embedded in or coupled to one or more processors, or another electronic device that can access a network. For ease of description, the following continues to use the computer 100 as an example to describe the technical solutions of this application.

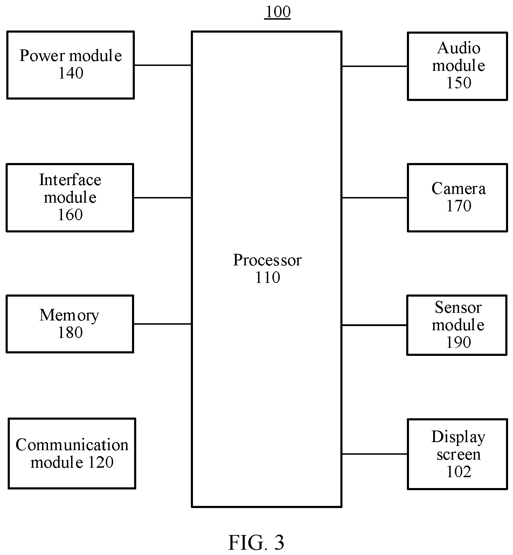

With reference to FIG. 3, the following describes in detail a hardware structure of the computer 100 in the foregoing embodiments. In FIG. 3, similar components have a same reference numeral. As shown in FIG. 3, the computer 100 may include a processor 110, a power module 140, a memory 180, a camera 170, a communication module 120, a sensor module 190, an audio module 150, an interface module 160, a display screen 102, and the like.

It may be understood that the structure illustrated in this embodiment of this application constitutes no specific limitation on the computer 100. In some other embodiments of this application, the computer 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units, for example, may include a processing module or a processing circuit of a central processing unit (Central Processing Unit, CPU), a graphics processing unit (Graphics Processing Unit, GPU), a digital signal processor (Digital Signal Processor, DSP), a micro-programmed control unit (Micro-programmed Control Unit, MCU), an artificial intelligence (Artificial Intelligence, AI) processor, a programmable logic device (Field Programmable Gate Array, FPGA), or the like. Different processing units may be independent components, or may be integrated into one or more processors.

In some instances of this application, the processor 110 may be configured to detect whether a trigger event about adding partial resources or all resources on a function tab of a browser to favorites is generated. In addition, when it is detected that a trigger event about adding the partial resources on the function tab is generated, the resources to be added to favorites, a display style file corresponding to the resources, and a script file are stored locally. In addition, a storage path and a resource name that corresponds to the foregoing partial resources are stored, and a parameter such as a favorites type corresponding to the foregoing partial resources is stored.

In some instances of this application, the processor 110 may be configured to: determine, based on a favorites type parameter of the partial resources, whether the partial resources need to be displayed on a favorites tab; when it is determined that the partial resources need to be displayed on the favorites tab, display the partial resources on the favorites tab based on the storage path and the resource name that are of the partial resources and that are stored in an information sharing unit 221, and the parameter such as coordinates and a size that corresponds to the partial resources and that is stored in a parameter storage unit 222; and when it is determined that the partial resources do not need to be displayed on the favorites tab, add the partial resources to favorites in a favorites market based on the storage path and the resource name that are of the partial resources and that are stored in the information sharing unit 221.

The memory 180 may be configured to store data, a software program, and a module; and may be a volatile memory (Volatile Memory) such as a random-access memory (Random-Access Memory, RAM), may be a non-volatile memory (Non-Volatile Memory), such as a read-only memory (Read-Only Memory, ROM), a flash memory (Flash Memory), a hard disk drive (Hard Disk Drive, HDD), or a solid-state drive (Solid-State Drive, SSD), may be a combination of the foregoing types of memories, or may be a removable storage medium such as a secure digital (Secure Digital, SD) storage card. Specifically, the memory 180 may include a program storage area (not shown in the figure) and a data storage area (not shown in the figure). The program storage area may store program code, and the program code is used to enable the processor 110 to execute the program code to perform the method for implementing a favorites function provided in embodiments of this application. In some embodiments of this application, the data storage area may be configured to store partial resources to be added to favorites, display style files and script files of the partial resources. In some other embodiments of this application, the data storage area may be configured to store parameters such as coordinates, sizes, and favorites types of the partial resources.

The power module 140 may include a power supply, a power management component, and the like. The power supply may be a battery. The power management component is configured to manage charging of the power supply and power supplying to another module performed by the power supply. The charging management module is configured to receive charging input from a charger. The power management module is configured to connect to the power supply, the charging management module, and the processor 110.

The communication module 120 may include a mobile communication module and/or a wireless communication module. The mobile communication module may include but is not limited to an antenna, a power amplifier, a filter, a low noise amplifier (Low Noise Amplifier, LNA), and the like. The wireless communication module may include an antenna, and receive and send an electromagnetic wave through the antenna. The wireless communication module may provide a wireless communication solution that is applied to the computer 100 and that includes a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), near field communication (Near Field Communication, NFC) technology, an infrared (Infrared, IR) technology, and the like. The computer 100 may communicate with a network and another device by using the communication module.

The camera 170 is configured to capture a static image or a video. An optical image of an object is generated through a lens, and is projected onto a photosensitive element. The photosensitive element converts an optical signal into an electrical signal, and then transmits the electrical signal to an ISP (Image Signal Processor, image signal processor) to convert the electrical signal into a digital image signal. The computer 100 may implement an image shooting function by using the ISP, the camera 170, a video codec, a GPU (Graphic Processing Unit, graphics processing unit), the display screen 102, an application processor, and the like.

The display screen 102 includes a display panel. The display panel may be a liquid crystal display (Liquid Crystal Display, LCD), an organic light-emitting diode (Organic Light-emitting Diode, OLED), an active-matrix organic light-emitting diode and active-matrix organic light-emitting diode (Active-matrix Organic Light-emitting Diode, AMOLED), a flexible light-emitting diode (Flexible Light-emitting Diode, FLED), a mini-LED, a micro LED, a micro OLED, a quantum dot light-emitting diode (Quantum Dot Light-emitting Diodes, QLED), or the like. For example, the display screen 102 is configured to display a user interface such as a function tab and a favorites tab of the browser.

The sensor module 190 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like.

The audio module 150 may convert digital audio information into an analog audio signal for output, or convert analog audio input into a digital audio signal. The audio module 150 may be further configured to encode and decode an audio signal. In some embodiments, the audio module 150 may be disposed in the processor 110, or some function modules of the audio module 150 are disposed in the processor 110. In some embodiments, the audio module 150 may include a speaker, an earpiece, a microphone, and a headset interface.

The interface module 160 includes an external memory interface, a universal serial bus (Universal Serial Bus, USB) interface, a subscriber identity module (Subscriber Identity Module, SIM) card interface, and the like.

It may be understood that the hardware structure shown in FIG. 3 constitutes no specific limitation on the computer 100. In some other embodiments of this application, the computer 100 may include more or fewer components than those shown in FIG. 3, or some components may be combined, or some components may be split, or different component arrangements may be used.

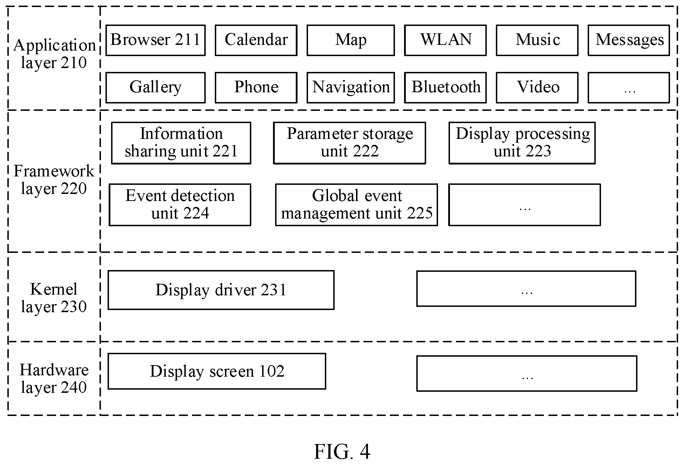

With reference to FIG. 4, the following describes in detail a system architecture of the computer 100 in the foregoing embodiments. Specifically, as shown in FIG. 4, a system of the computer 100 includes an application layer 210, a framework layer 220, a kernel layer 230, and a hardware layer 240.

The application layer 210 may include a series of application packages, for example, Browser 211, and other applications such as Calendar and Map.

The framework layer 220 includes an information sharing unit 221, a parameter storage unit 222, a display processing unit 223, an event detection unit 224, a global event management unit 225, and the like. The event detection unit 224 is configured to detect whether the browser generates a trigger event about adding partial resources or all resources on a function tab to favorites.

The information sharing unit 221 is configured to store a path and a resource name of a resource that is selected by a user in the browser to add to favorites. In some embodiments, the information sharing unit 221 is further configured to store a favorites type of the resource that is selected by the user in the browser to add to favorites. In some embodiments, the information sharing unit 221 is a localstorage (a local storage unit in an HTML5). The information sharing unit 221 may include a collectlist field and a collectstatus field. Content corresponding to the collectlist field is storage paths and resource names of a plurality of resources that have been added to favorites or are being added to favorites and that are stored in the information sharing unit 221. Content of the collectstatus field is in one-to-one correspondence with the content of the collectlist field, and the content of the collectstatus field is for describing a favorites type of a resource corresponding to the collectlist field. For example, if the content of collectstatus is current, it indicates that the favorites type of the corresponding resource is to be added to favorites and currently displayed. If the content of collectstatus is later, it indicates that the favorites type of the corresponding resource is not to be displayed after being added to favorites.

The parameter storage unit 222 is configured to store a name and a favorites type of a favorites resource, and parameters such as coordinates, a size, and a name corresponding to the favorites resource when the favorites resource needs to be displayed on a favorites tab of the browser.

The display processing unit 223 is configured to listen to the collectlist field in the information sharing unit 221 of the computer 100 in real time. The content corresponding to the collectlist field is the storage paths and the resource names of the plurality of resources that have been added to favorites or are being added to favorites and that are stored in the information sharing unit 221. When the display processing unit 223 of the computer 100 listens to that a storage path and a resource name are newly added to the collectlist field in the information sharing unit 221, the display processing unit 223 determines that a new resource needs to be added to favorites. The display processing unit 223 determines, based on a favorites type parameter of the new resource, whether the resource needs to be displayed on the favorites tab.

The global event management unit 225 is configured to create events for a sub-window and a top-layer top window of different iframe tags on the favorites tab of the browser, to implement communication between different iframe tags on the favorites tab, and implement mutual communication between the plurality of favorites resources on the favorites tab of the browser.

In some other embodiments, the system of the computer 100 may further include a system library layer, and the system library layer is located between the framework layer and the kernel layer. This is not limited herein.

The kernel layer 230 includes a display driver 231, configured to drive a display screen 102 to display a user interface such as a function tab and a favorites tab of the browser. In another embodiment, the kernel layer 230 may alternatively include another drive, for example, a touch control drive or an audio drive. This is not limited herein.

The hardware layer 240 includes the display screen 102, and the display screen 102 is configured to display the user interface such as the function tab and the favorites tab of the browser. In another embodiment, the hardware layer 240 may alternatively include physical components such as a speaker and a motor. This is not limited herein.

It can be learned from the foregoing descriptions of the schematic diagrams of the plurality of interfaces shown in FIG. 2A to FIG. 2G that, by performing the method for implementing a favorites function of a browser provided in embodiments of this application, the computer 100 may add partial resources or all resources on the function tab (namely, a tab that displays content searched by the user) of the browser to favorites, and display, based on a requirement of the user, a resource that is added to favorites by the user on the favorites tab of the browser.

With reference to the schematic diagrams of the plurality of interfaces shown in FIG. 2A to FIG. 2G and the system architecture diagram of the computer 100 shown in FIG. 4, the following separately describes in detail a process of adding partial content on the function tab of the browser to favorites and adding all content on the function tab of the browser to favorites.

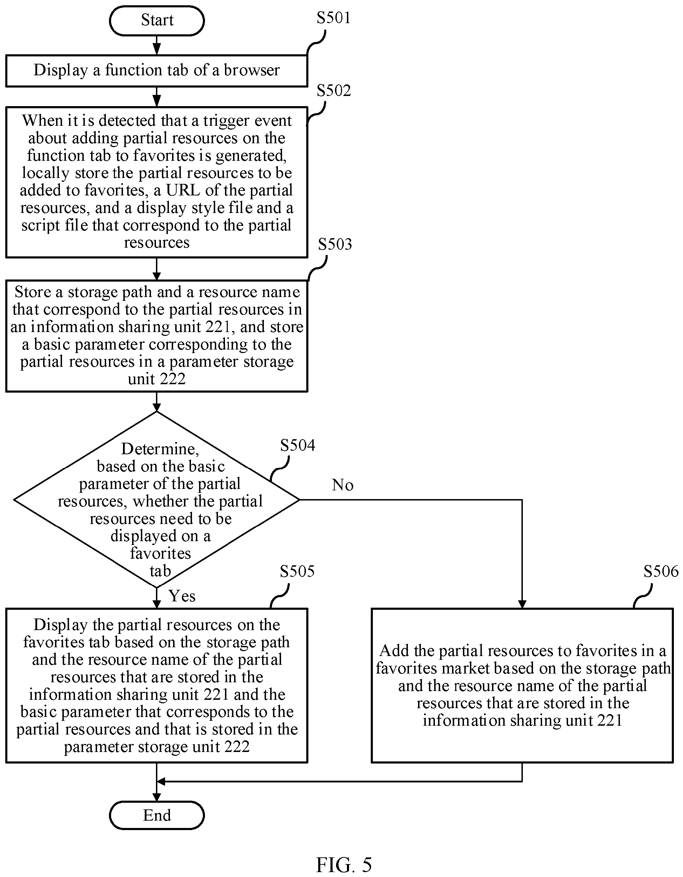

First, a flowchart shown in FIG. 5 is used as an example to describe in detail a process of adding the partial content on the function tab of the browser to favorites provided in some embodiments of this application. The steps in the flowchart shown in FIG. 5 may be performed by the computer 100. Specifically, the flowchart shown in FIG. 5 includes the following steps.

S501: Display the function tab of the browser.

It should be understood that the computer 100 displays, by using the display screen 102, the function tab of the browser installed on the computer 100. The function tab of the browser may be a tab that is of the browser and that is used to display content searched by the user. For example, the function tab of the browser may be the tab 01 shown in FIG. 2A on which pictures such as flowers, characters, and landscape are displayed. For another example, the function tab of the browser may be the tab 03 shown in FIG. 2C on which the video vo1 is displayed.

S502: When it is detected that a trigger event about adding the partial resources on the function tab to favorites is generated, locally store the partial resources to be added to favorites, a URL of the partial resources, and a display style file and a script file that correspond to the partial resources.

For example, in some embodiments, when detecting a trigger event about adding the picture P1 shown in FIG. 2A to favorites, the event detection unit 224 of the computer 100 uses the picture P1 or a URL corresponding to the picture P1, and a display style file and a script file that correspond to the picture P1 as a resource package of the picture P1, and locally stores the resource package in the computer 100. A local storage path of the resource package of the picture P1 in the computer 100 is denoted as Path1, and a name of the resource package is denoted as Name1. In some embodiments, the name of the resource package may be a name of a resource of the picture: P1. It should be understood that the name of the resource package may be randomly set based on a requirement. This is not limited in this application.

For another example, in some embodiments, when detecting a trigger event about adding the video vo1 shown in FIG. 2C to favorites, the event detection unit 224 of the computer 100 uses the video vo1 or a URL corresponding to the video vo1, and a display style file and a script file that correspond to the video vo1 as a resource package of the video vo1, and locally stores the resource package in the computer 100. A local storage path of the resource package of the video vo1 in the computer 100 is denoted as Path2, and a name of the resource package is denoted as Name2. In some embodiments, the name of the resource package may be a name of a resource of the video: vo1.

In addition, in some embodiments, the user may further simultaneously select a plurality of resources from a tab currently displayed on the browser to add to favorites. For example, when detecting a trigger event about adding the picture P1 and the picture P2 shown in FIG. 2H to favorites, the event detection unit 224 of the computer 100 uses the picture P1 and the picture P2, or a URL of the picture P1 and a URL of the picture P2, and display style files and script files that correspond to the picture P1 and the picture P2 as a resource package of the picture P1 and the picture P2, and locally stores the resource package in the computer 100. A local storage path of the resource package of the picture P1 and the picture P2 in the computer 100 is denoted as Path0, and a name of the resource package is denoted as Name0. In some embodiments, the name of the resource package may be a name of a resource of the pictures: P1 & P2. It should be understood that the name of the resource package may be randomly set based on a requirement. This is not limited in this application.

In addition, the display style file corresponding to the partial resources is for describing a display style of a display element included in the partial resources. For example, if the partial resources are a piece of text selected by the user, the display element included in the partial resources may be a font, a size, a color, a background color of the text, and a special format (for example, bold, tilt, or underscore) of the text. In some embodiments, the display style file corresponding to the partial resources may be specifically a CSS code file obtained by using a crawler technology from a tab corresponding to the partial resources.

In addition, the script file corresponding to the partial resources is for describing running logic corresponding to the partial resources, for example, the running logic is that after the partial resources are selected on the function tab by using a mouse, a prompt box pops up, or a prompt box pops up after the partial resources are selected and right-clicked by using the mouse. In some embodiments, the script file corresponding to the partial resources may be specifically a JavaScript script file obtained by using a crawler technology from a tab corresponding to the partial resources.

In some embodiments, the trigger event about adding the partial resources on the function tab to favorites may be, for example, that the user selects the partial resources on the tab by using the mouse, and taps a control related to favorites. For example, as shown in FIG. 2A, the user selects the landscape picture P1 on the tab 01 by using the mouse and right-clicks the mouse, and the favorites menu 121 pops up. After the user taps the "add to favorites and currently display" control by using the mouse, the browser generates the foregoing trigger event about adding the partial resources on the function tab to favorites.

S503: Store a storage path and a resource name that correspond to the partial resources in the information sharing unit 221, and store a basic parameter corresponding to the partial resources in the parameter storage unit 222.

The basic parameter of the partial resources includes the name and the favorites type of the partial resources, and parameters such as coordinates, a size, and a name that correspond to the partial resources when the partial resources are displayed on the favorites tab of the browser. In some embodiments, the favorites type of the partial resources includes: being added to favorites and currently displayed, and not being displayed after being added to favorites.

In some embodiments, the information sharing unit 221 is a localstorage (a local storage unit in an HTML5), and is configured to store a storage path and a resource name of a resource that is selected by the user in the browser to add to favorites. In some embodiments, the information sharing unit 221 is further configured to store a favorites type of the resource that is selected by the user in the browser to add to favorites.

It should be understood that the basic parameter such as the storage path, the resource name, and the favorites type of the resource that is selected by the user to add to favorites are stored in different storage space, so that resource favorites and display do not affect each other, to help improve stability of the browser.

For example, in some embodiments, the storage path Path1 corresponding to the picture P1 and the name P1 of the picture P1 are stored in the information sharing unit 221; and the name P1 of the picture P1 and a favorites type (being added to favorites and currently displayed) are stored in the parameter storage unit 222. For another example, the storage path Path2 corresponding to the video vo1 and the name vo1 of the video vo1 are stored in the information sharing unit 221; and the name vo1 of the video vo1 and a favorites type (being added to favorites and currently displayed) are stored in the parameter storage unit 222. For another example, in some embodiments, the storage path Path0 corresponding to the picture P1 and the picture P2 and the name P1 & P2 of the picture P1 and the picture P2 is stored in the information sharing unit 221; and the name P1 & P2 of the picture P1 and the picture P2 and a favorites type (being added to favorites and currently displayed) are stored in the parameter storage unit 222.

In some embodiments, coordinates and sizes that correspond to favorites resources and that are stored in the parameter storage unit 222 is preset fixed parameters. In some embodiments, coordinates and sizes that correspond to favorites resource and that are stored in the parameter storage unit 222 may alternatively be parameters determined in real time based on a current typesetting status of the favorites tab.

S504: Determine, based on the basic parameter of the partial resources, whether the partial resources need to be displayed on the favorites tab. For example, it may be determined, based on a favorites type parameter included in the basic parameter of the partial resources, whether the partial resources need to be displayed on the favorites tab. If the favorites type is to be added to favorites and currently displayed, it indicates that the partial resources need to be displayed on the favorites tab, and S505 is performed. If the favorites type is not to be displayed after being added to favorites, it indicates that the partial resources do not need to be displayed on the favorites tab, and the partial resources may be added to a favorites market of the browser, and S506 is performed.

For example, in some embodiments, the display processing unit 223 of the computer 100 listens to the collectlist field in the information sharing unit 221 of the computer 100 in real time. The content corresponding to the collectlist field is the storage paths and the resource names of the plurality of resources that have been added to favorites or are being added to favorites and that are stored in the information sharing unit 221. When the display processing unit 223 of the computer 100 listens to that a storage path and a resource name are newly added to the collectlist field in the information sharing unit 221, the display processing unit 223 determines that a new resource needs to be added to favorites. The display processing unit 223 determines, based on a favorites type parameter of the new resource, whether the resource needs to be displayed on the favorites tab.

In some embodiments, when a storage path and a resource name of a new resource are written into the information sharing unit 221, a favorites type parameter corresponding to the resource may also be written into the information sharing unit 221, for example, written into the collectstatus field in the information sharing unit 221, so that the display processing unit 223 determines, based on the content of the collectstatus field, whether to display the new resource on the favorites tab of the browser. For example, when a value of the collectstatus field is current, the display processing unit 223 determines that partial resources on the function tab need to be displayed on the favorites tab; or when the value of the collectstatus field is later, the display processing unit 223 determines that the partial resources on the function tab do not need to be displayed on the favorites tab.

S505: Display the partial resources on the favorites tab based on the storage path and the resource name of the partial resources that are stored in the information sharing unit 221 and the basic parameter that corresponds to the partial resources and that is stored in the parameter storage unit 222.

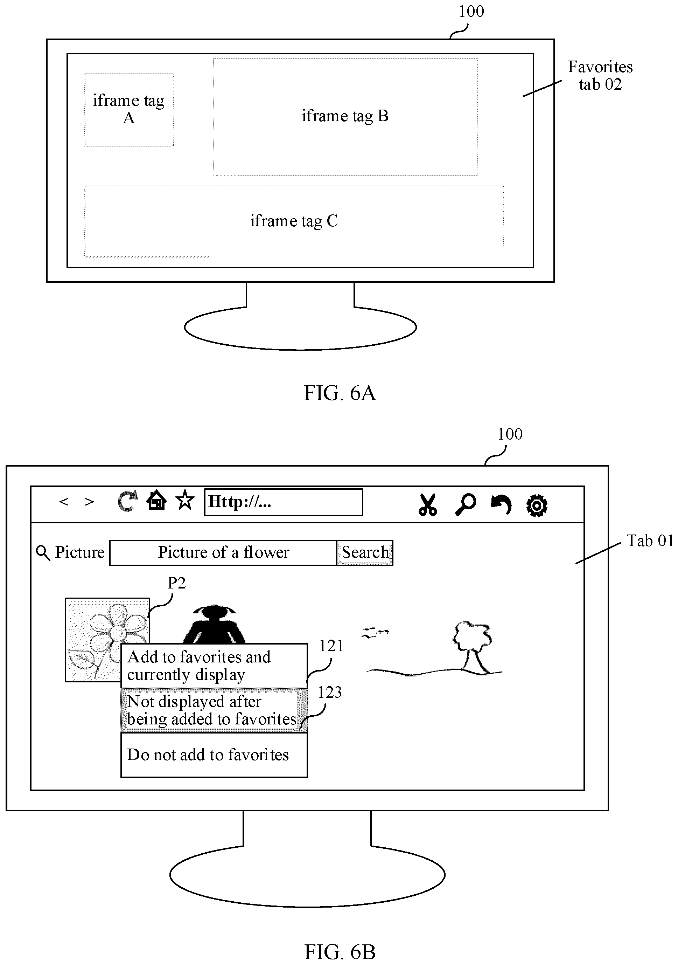

For example, in some embodiments, when the display processing unit 223 of the computer 100 listens to that the storage path and the resource name of the picture P1 are added to the collectlist field in the information sharing unit 221, the display processing unit 223 determines, by using the collectstatus field in the information sharing unit 221, that the favorites type of the picture P1 is: to be added to favorites and currently displayed. Therefore, based on parameters such as coordinates and a size of the picture P1 stored in the parameter storage unit 222, an iframe tag A is inserted into a favorites tab 02 (html page) shown in FIG. 6A, and the storage path and the resource name of the picture P1 are written into src in the iframe, to obtain the picture P1, and the display style file and the script file that correspond to the picture P1, so that the picture P1 is displayed on the tab 02 shown in FIG. 2B based on the display style described by the display style file corresponding to the picture P1, and the running logic described by the script file. In some embodiments, code of the iframe tag A shown in FIG. 6A may be, for example,

```
         <frameset rows="xx,*" frameborder='xx'>
         <frame src="Path1"name="P1">
         <frameset cols="xx">
         <frameset rows="xx">
```

Similarly, in some embodiments, when the display processing unit 223 of the computer 100 listens to that the storage path and the resource name of the video vo1 on the tab 03 shown in FIG. 2C are added to the collectlist field in the information sharing unit 221, the display processing unit 223 determines, by using the collectstatus field in the information sharing unit 221, that the favorites type of the video vo1 is: to be added to favorites and currently displayed. Therefore, based on parameters such as coordinates and a size of the video vo1 stored in the parameter storage unit 222, an iframe tag B is inserted into the favorites tab 02 (html page) shown in FIG. 6A, and the storage path and the resource name of the video vo1 are written into src in the iframe, to obtain the video vo1, and the display style file and the script file that correspond to the video vo1, so that the video vo1 is displayed on the tab 02 shown in FIG. 2D based on the display style described by the display style file corresponding to the video vo1, and the running logic described by the script file. In some embodiments, code of the iframe tag B shown in FIG. 6A may be, for example,

```
         <frameset rows="xx,*" frameborder='xx'>
         <frame src="Path2"name="vo1">
         <frameset cols="xx">
         <frameset rows="xx">
```

It should be noted that, when the browser completes adding the video vo1 to favorites and displays the video vo1 on the tab 02 shown in FIG. 2D, interface content of the video vo1 displayed on the tab 02 is consistent with interface content of the video vo1 to be added to favorites on the tab 03 shown in FIG. 2C. For example, when the user selects the video vo1 on the tab 03 by using the mouse to add the video vo1 to favorites, a playback progress of the video vo1 is one minute. After the browser completes adding the video vo1 to favorites, when the user opens the favorites tab 02, the video vo1 displayed on the favorites tab 02 is also a pause interface of playing the video vo1 to one minute.

In some embodiments, the user may further adjust locations of the picture P1 and the video vo1 that are displayed on the favorites tab 02, and perform operations such as zooming in and zooming out on the picture P1 and the video vo1. For example, a Grister plug-in (a front-end drag plug-in) is installed in the browser, and the user separately selects and drags the control T in the lower right corner of the picture P1 and the video vo1 by using the mouse, to implement a zoom-in operation on the picture P1 and the video vo1.

In addition, in some other embodiments, the user may further select some resources (for example, a resource in which the user is not currently interested) from the plurality of favorites resources displayed on the favorites tab 02, and add the resources to a favorites market of the browser. For example, the user taps the control S in the upper right corner of the picture P1 shown in FIG. 2D, and the favorites tab 02 of the browser enters the user interface shown in FIG. 2E. The picture P1 is no longer displayed on the favorites tab 02, but is added to the favorites market on the left side of the favorites tab 02.

In this way, the user can customize, based on a requirement of the user, a resource that needs to be displayed on the favorites tab of the browser, and adjust locations and sizes of resources displayed on the favorites tab of the browser. This can greatly improve use experience when the user uses the favorites function of the browser.

S506: Add the partial resources to favorites in the favorites market based on the storage path and the resource name of the partial resources that are stored in the information sharing unit 221.

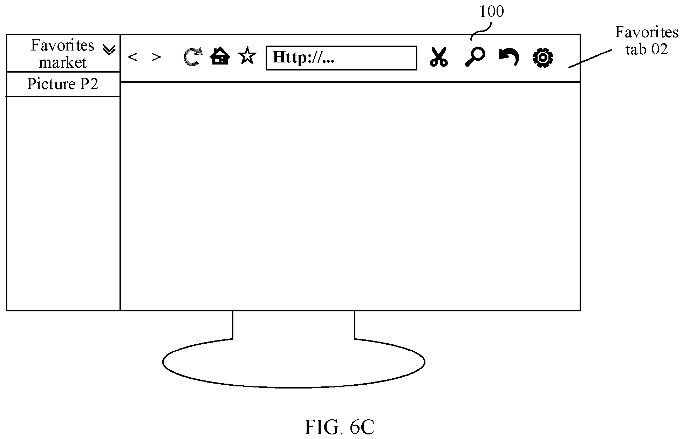

For example, in some embodiments, the user selects a picture P3 on a tab 01 shown in FIG. 6B by using the mouse, then right-clicks the mouse, a favorites menu 121 pops up on the tab 01, and the user taps a "not displayed after being added to favorites" control 123 by using the mouse. After detecting an operation of tapping the control 123 by the user, the event detection unit 224 uses the picture P3, and a display style file and a script file that correspond to the picture P3 as a resource package of the picture P3, and locally stores the resource package in the computer 100. A local storage path of the resource package of the picture P3 in the computer 100 is denoted as Path3, and a name of the resource package is denoted as Name3. In some embodiments, the name of the resource package may be a name of a resource of the picture: P3. When the display processing unit 223 of the computer 100 listens to that the storage path and the resource name of the picture P3 are added to the collectlist field in the information sharing unit 221, the display processing unit 223 determines, by using the collectstatus field in the information sharing unit 221, that a favorites type of the picture P3 is: not being displayed after being added to favorites, and adds the picture P3 to a favorites market shown in FIG. 6C. After the user taps the picture P3 in the favorites market, the display processing unit 223 may be triggered to obtain the storage path of the picture P3, and the picture P3 is displayed on the favorites tab 02. In this way, a requirement that the user customizes whether the resource added to favorites is intuitively displayed on the favorites tab 02 can be implemented, to help improve use experience when the user uses the favorites function of the browser.

After the process of adding the partial resources on the function tab of the browser to favorites provided in some embodiments of this application is described, the following describes in detail a process of adding all resources in the function tab of the browser to favorites provided in some other embodiments of this application.

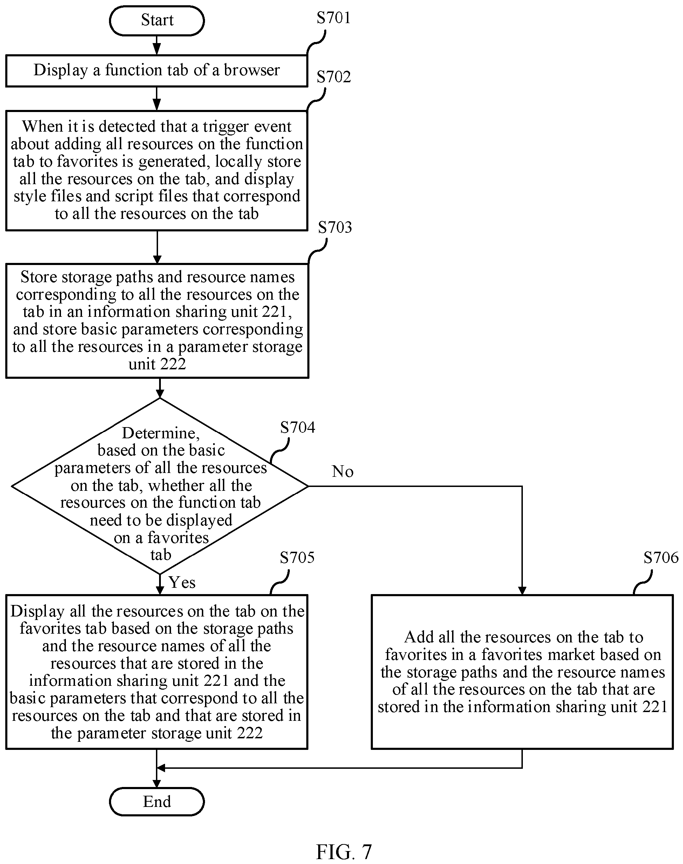

The following uses a flowchart shown in FIG. 7 as an example to describe in detail the process of adding all the content on the function tab of the browser to favorites provided in some embodiments of this application. The steps in the flowchart shown in FIG. 7 may be performed by the computer 100. Specifically, the flowchart shown in FIG. 7 includes the following steps.

S701: Display the function tab of the browser.

For example, in the embodiment shown in FIG. 2F, the computer 100 displays an interface of the tab 04 of the browser, and the content on the tab 04 is the partial chapters of the novel nov1.

S702: When it is detected that a trigger event about adding all the resources on the function tab to favorites is generated, locally store all the resources on the tab, and display style files and script files that correspond to all the resources on the tab.

In some embodiments, the trigger event about adding all the resources on the function tab to favorites is: The user taps a control related to favorites on the function tab. For example, as shown in FIG. 2F, the user taps the favorites control 114 on the tab 04, and the favorites menu 121 pops up. After the user taps the "add to favorites and currently display" control 122 by using the mouse, the browser generates the foregoing trigger event about adding all the resources on the function tab to favorites.

In some other embodiments, the trigger event about adding all the resources on the function tab to favorites may alternatively be: The user selects all the content on the function tab, and taps a control related to favorites on the function tab. For example, the user selects all the content on the tab 04 shown in FIG. 2F by using the mouse and right-clicks the mouse, and the favorites menu 121 pops up. Then, after the user taps the "add to favorites and currently display" control 122 by using the mouse, the browser generates the foregoing trigger event about adding all the resources on the function tab.

It should be understood that the trigger event about adding all the resources on the function tab to favorites in the foregoing embodiments is merely some example descriptions for ease of understanding of the technical solutions of this application. During actual application, how to specifically generate the trigger event may be determined based on an actual situation. This is not limited in this application.

For example, in some embodiments, all the content displayed on the tab 04 shown in FIG. 2F is the partial chapters of the novel nov1. When detecting a trigger event about adding all the content on the tab 04 shown in FIG. 2F to favorites, the event detection unit 224 of the computer 100 uses the novel nov1, and a display style file and a script file that correspond to the novel nov1 that are displayed on the tab 04 as a resource package of the novel nov1, and locally stores the resource package in the computer 100. A local storage path of the resource package of the novel nov1 in the computer 100 is denoted as Path4, and a name of the resource package is denoted as Name4. In some embodiments, the name of the resource package may be a name of the novel nov1: nov1. It should be understood that the name of the resource package may be randomly set based on a requirement. This is not limited in this application. For meanings of the display style files and the script files corresponding to all the resources on the tab, refer to the related text descriptions of S502 in FIG. 5. Details are not described herein again.

S703: Store storage paths and resource names corresponding to all the resources on the tab in the information sharing unit 221, and store basic parameters corresponding to all the resources in the parameter storage unit 222.

The basic parameters of all the resources include the names and favorites types of all the resources, and parameters such as coordinates, sizes, and names corresponding to all the resources when all the resources are displayed on the favorites tab of the browser. In some embodiments, the favorites types of all the resources include: being added to favorites and currently displayed, and not being displayed after being added to favorites.

For example, in some embodiments, the storage path Path4 corresponding to the novel nov1 on the tab 04 and the name nov1 of the novel nov1 are stored in the information sharing unit 221. The name nov1 of the novel nov1 and a favorites type (being added to favorites and currently displayed) are stored in the parameter storage unit 222.

In addition, for descriptions of the information sharing unit 221 and the parameter storage unit 222, refer to the related text descriptions of S503 in FIG. 5. Details are not described herein again.

S704: Determine, based on the basic parameters of all the resources on the tab, whether all the resources on the function tab need to be displayed on the favorites tab. For example, it may be determined, based on a favorites type parameter included in the basic parameters of all the resources, whether all the resources need to be displayed on the favorites tab. If the favorites type is to be added to favorites and currently displayed, it indicates that all the resources on the function tab need to be displayed on the favorites tab, and S705 is performed. If the favorites type is not to be displayed after being added to favorites, it indicates that all the resources on the function tab do not need to be displayed on the favorites tab, and S706 is performed.

For example, in some embodiments, the display processing unit 223 of the computer 100 listens to the collectlist field in the information sharing unit 221 of the computer 100 in real time. When the display processing unit 223 of the computer 100 listens to that a storage path and a resource name are newly added to the collectlist field in the information sharing unit 221, the display processing unit 223 determines that a new resource needs to be added to favorites. The display processing unit 223 determines, based on a favorites type parameter of the new resource, whether the resource needs to be displayed on the favorites tab. In some embodiments, the display processing unit 223 of the computer 100 may determine, based on a value of the collectstatus field in the information sharing unit 221, whether all the resources on the function tab need to be displayed on the favorites tab. For example, when a value of the collectstatus field is current, the display processing unit 223 determines that all the resources on the function tab need to be displayed on the favorites tab; or when the value of the collectstatus field is later, the display processing unit 223 determines that all the resources on the function tab do not need to be displayed on the favorites tab.

S705: Display all the resources on the tab on the favorites tab based on the storage paths and the resource names of all the resources that are stored in the information sharing unit 221 and the basic parameters that correspond to all the resources on the tab and that are stored in the parameter storage unit 222.

For example, in some embodiments, when the display processing unit 223 of the computer 100 listens to that the storage path and the resource name of the novel nov1 are added to the collectlist field in the information sharing unit 221, the display processing unit 223 determines, by using the collectstatus field in the information sharing unit 221, that the favorites type of the novel nov1 is: to be added to favorites and currently displayed. Therefore, based on parameters such as coordinates and a size of the novel nov1 stored in the parameter storage unit 222, an iframe tag C is inserted into the favorites tab 02 (html page) shown in FIG. 6A, and the storage path and the resource name of the novel nov1 are written into src in the iframe, to obtain the novel nov1, and the display style file and the script file that correspond to the novel nov1, so that the novel nov1 is displayed on the favorites tab 02 shown in FIG. 2G based on the display style described by the display style file corresponding to the novel nov1, and the running logic described by the script file. In some embodiments, code of the iframe tag C shown in FIG. 6A may be, for example,

```
         <frameset rows="xx,*" frameborder='xx'>
         <frame src="Path4"name="nov1">
         <frameset cols="xx">
         <frameset rows="xx">
```

Similarly, in some embodiments, the user may further adjust a location of the novel nov1 displayed on the favorites tab 02 shown in FIG. 2G, and perform operations such as zooming in and zooming out on the novel nov1. For example, a Grister plug-in (a front-end drag plug-in) is installed in the browser, and the user separately selects and drags the control T in the lower right corner of the picture P1 and the video vo1 by using the mouse, to implement a zoom-in operation on the picture P1 and the video vo1.

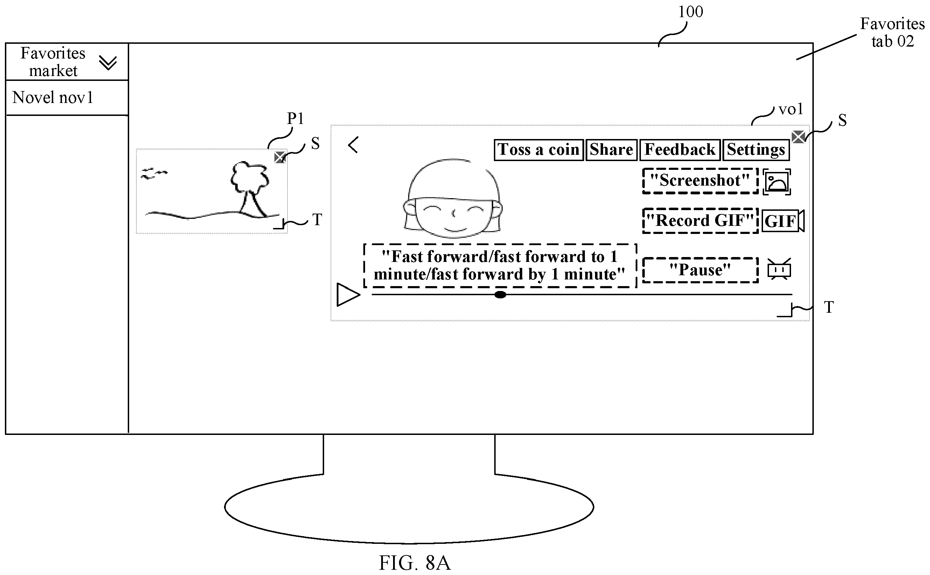

For example, the user taps the control S in the upper right corner of the novel nov1 shown in FIG. 2G, and the favorites tab 02 of the browser enters a user interface shown in FIG. 8A. The novel nov1 is no longer displayed on the favorites tab 02, but is added to a favorites market on a left side of the favorites tab 02. In this way, the user can customize, based on a requirement of the user, a resource that needs to be displayed on the favorites tab of the browser, and adjust locations and sizes of resources displayed on the favorites tab of the browser. This can greatly improve use experience when the user uses the favorites function of the browser.

S706: Add all the resources on the tab to favorites in the favorites market based on the storage paths and the resource names of all the resources on the tab that are stored in the information sharing unit 221.

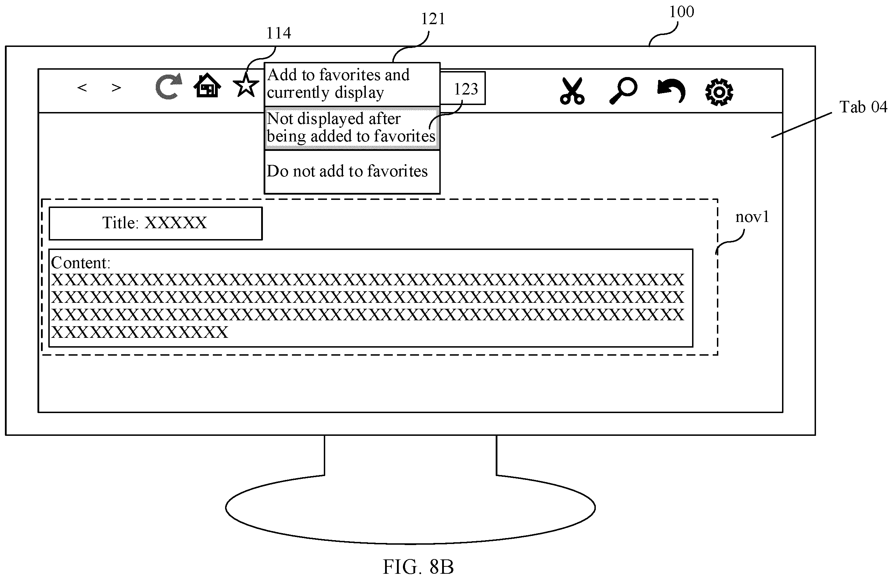

For example, in some embodiments, the user taps a favorites control 114 on a tab 04 shown in FIG. 8B, and a favorites menu 121 pops up on the tab 04. The user taps a "not displayed after being added to favorites" control 123 by using the mouse. After detecting an operation of tapping the control 123 by the user, the event detection unit 224 uses the novel nov1, and a display style file and a script file that correspond to the novel nov1 as a resource package of the novel nov1, and locally stores the resource package in the computer 100. A local storage path of the resource package of the novel nov1 in the computer 100 is denoted as Path5, and a name of the resource package is denoted as Name5 In some embodiments, the name of the resource package may be a name of a resource of the novel nov1: nov1. When the display processing unit 223 of the computer 100 listens to that the storage path and the resource name of the novel nov1 are added to the collectlist field in the information sharing unit 221, the display processing unit 223 determines, by using the collectstatus field in the information sharing unit 221, that a favorites type of the novel nov1 is: not being displayed after being added to favorites, and adds the novel nov1 to the favorites market shown in FIG. 8A. After the user taps the novel nov1 in the favorites market, the display processing unit 223 may be triggered to obtain the storage path of the novel nov1, and the novel nov1 is displayed on the favorites tab 02. In this way, a requirement that the user customizes whether the resource added to favorites is intuitively displayed on the favorites tab 02 can be implemented, to help improve use experience when the user uses the favorites function of the browser.

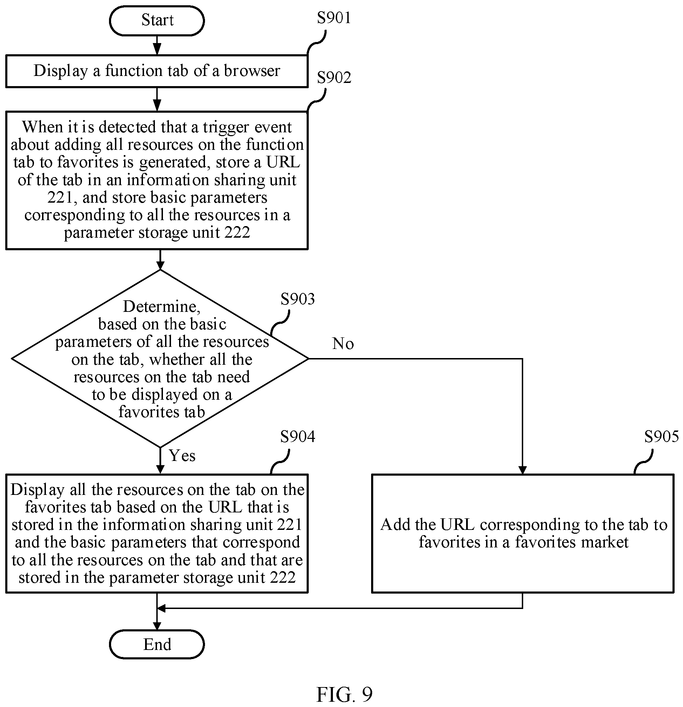

The following still uses an example in which all the content on the tab 04 in the browser shown in FIG. 2F is the partial chapters of the novel nov1 to describe in detail, with reference to a flowchart shown in FIG. 9, a process of adding all content of a function tab of the browser provided in some other embodiments of this application. The steps in the flowchart shown in FIG. 9 may be performed by the computer 100. Specifically, the flowchart shown in FIG. 9 includes the following steps.

S901: Display the function tab of the browser.

For example, in the embodiment shown in FIG. 2F, the computer 10 displays an interface of the tab 04 of the browser, and the content on the tab 04 is the partial chapters of the novel nov1.

S902: When it is detected that a trigger event about adding all the resources on the function tab to favorites is generated, store a URL of the tab in the information sharing unit 221, and store basic parameters corresponding to all resources in the parameter storage unit 222.

The basic parameters of all the resources include names and favorites types of all the resources, and parameters such as coordinates, sizes, and names corresponding to all the resources when all the resources are displayed on the favorites tab of the browser. In some embodiments, the favorites types of all the resources include: being added to favorites and currently displayed, and not being displayed after being added to favorites.

In S902, in comparison with S702 shown in FIG. 7, a difference only lies in that: in S902, when it is detected that the trigger event about adding all the resources on the function tab is generated, the URL corresponding to the tab to be added to favorites is stored in the information sharing unit 221 as a resource address. However, in S702, when it is detected that the trigger event about adding all the resources on the function tab to favorites is generated, all the content on the tab to be added to favorites is cached locally, and then a cached address and names of all the content on the tab added to favorites are stored in the information sharing unit 221 as resource addresses.

For example, in some embodiments, the content displayed on the tab 04 shown in FIG. 2F is the partial chapters of the novel nov1. When detecting the trigger event about adding all the content on the tab 04 shown in FIG. 2F to favorites, the event detection unit 224 of the computer 100 locally stores the URL, for example, url2, of the tab 04 in the computer 100. In addition, a favorites type of the tab 04 is stored in the information sharing unit 221. For definitions of the information sharing unit 221 and the parameter storage unit 222, refer to the related text descriptions of S502 in FIG. 5. Details are not described herein again.

S903: Determine, based on the basic parameters of all the resources on the tab, whether all the resources on the tab need to be displayed on the favorites tab. For example, it may be determined, based on a favorites type parameter included in the basic parameters of all the resources, whether all the resources need to be displayed on the favorites tab. If the favorites type is to be added to favorites and currently displayed, it indicates that all the resources on the function tab need to be displayed on the favorites tab, and S904 is performed. If the favorites type is not to be displayed after being added to favorites, it indicates that all the resources on the function tab do not need to be displayed on the favorites tab, and S905 is performed. For details, refer to the related text descriptions of S704 in FIG. 7. Details are not described herein again.

S904: Display all the resources on the tab on the favorites tab based on the URL that is stored in the information sharing unit 221 and the basic parameters that correspond to all the resources on the tab and that are stored in the parameter storage unit 222.

For example, in some embodiments, when the display processing unit 223 of the computer 100 listens to that the storage path and the resource name of the novel nov1 are added to the collectlist field in the information sharing unit 221, the display processing unit 223 determines, by using the collectstatus field in the information sharing unit 221, that the favorites type of the novel nov1 is: to be added to favorites and currently displayed. Therefore, based on parameters such as coordinates and a size of the novel nov1 stored in the parameter storage unit 222, an iframe tag C is inserted into the favorites tab 02 (html page) shown in FIG. 6A, and the URL of the tab 04 corresponding to the novel nov1 are written into src in the iframe tag C, to obtain the novel nov1, the display style file corresponding to the novel nov1, and the script file, so that the display style is described based on the display style file corresponding to the novel nov1, the running logic is described based on the script file, and the novel nov1 is displayed on the favorites tab 02 shown in FIG. 2G.

In some embodiments, code of the iframe tag C shown in FIG. 6A may be, for example,

```
         <frameset rows="xx,*" frameborder='xx'>
         <frame src="url2"name="nov1">
         <frameset cols="xx">
         <frameset rows="xx">
```

Similarly, in some embodiments, the user may further adjust a location of the novel nov1 displayed on the favorites tab 02 shown in FIG. 2G, and perform operations such as zooming in and zooming out on the novel nov1. For details, refer to the related text descriptions of S705 in FIG. 7. Details are not described herein again.

S905: Add the URL corresponding to the tab to favorites in a favorites market.

For example, the URL (url2) of the tab 04 corresponding to the novel nov1 is added to favorites in the favorites market shown in FIG. 8A. After the user taps the novel nov1 in the favorites market, the display processing unit 223 may be triggered to obtain the storage path of the novel nov1, and the novel nov1 is displayed on the favorites tab 02. In this way, a requirement that the user customizes whether the resource added to favorites is intuitively displayed on the favorites tab 02 can be implemented, to help improve use experience when the user uses the favorites function of the browser.

With reference to the foregoing descriptions of embodiments in FIG. 5 to FIG. 9, the processes of adding the partial resources or all the resources on the function tab of the browser to favorites that can be implemented in the technical solutions of this application is described in detail. To better understand the technical solutions of this application, the following further describes the technical solutions of this application with reference to a specific application scenario.

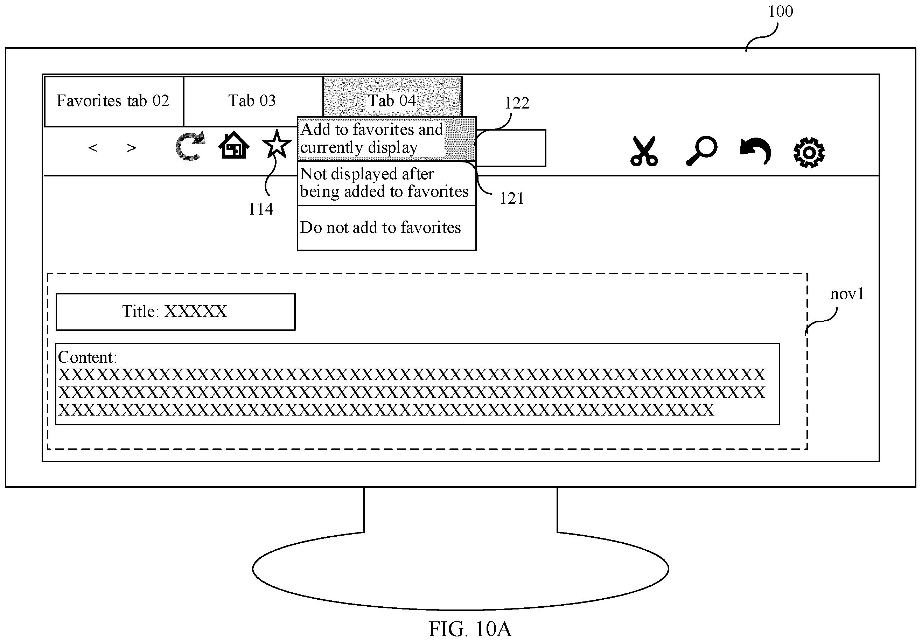

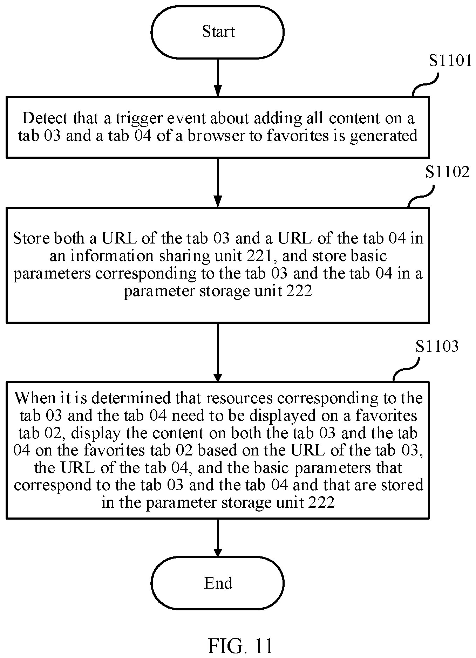

Specifically, with reference to schematic diagrams of user interfaces shown in FIG. 10A to FIG. 10D and a flowchart shown in FIG. 11, the following describes the technical solutions of this application by using a scenario in which a user uses a browser to concurrently read a plurality of resources as an example.

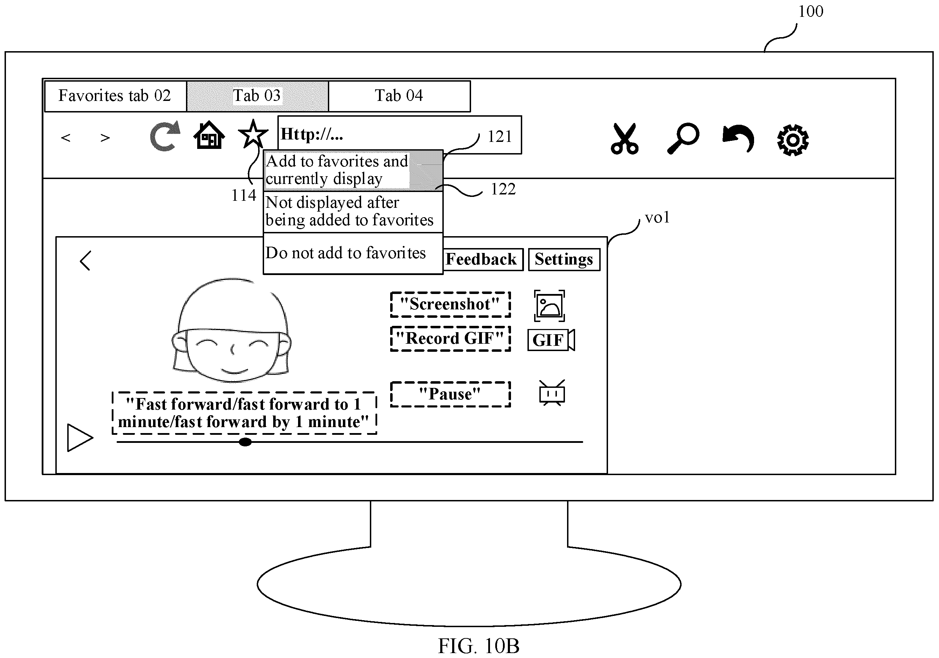

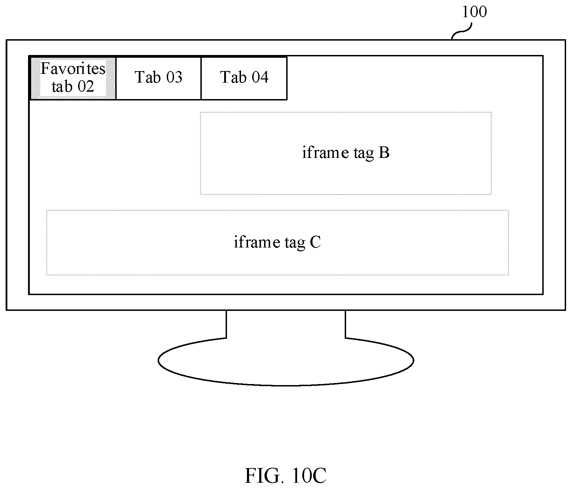

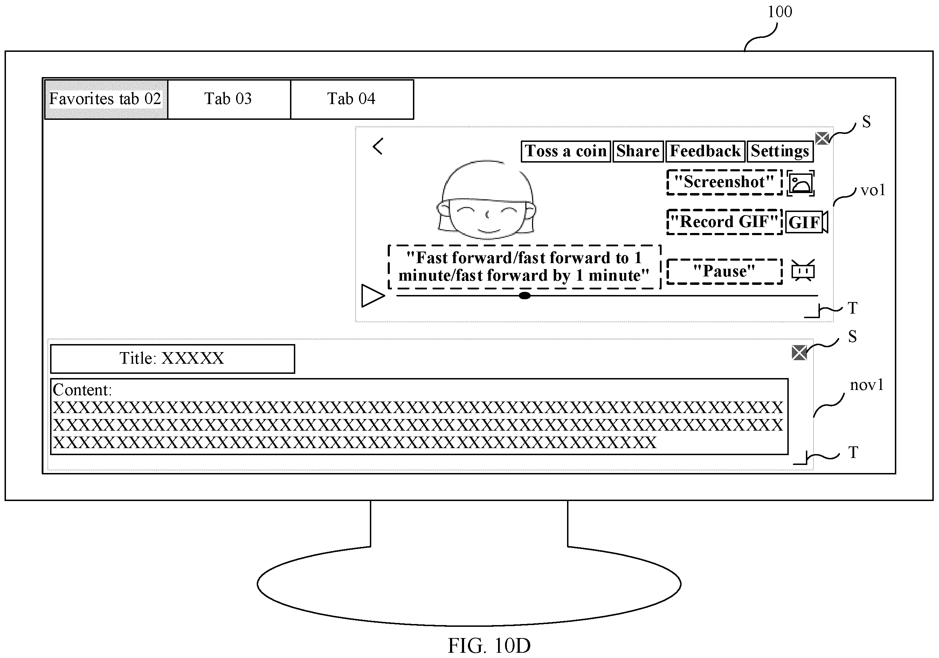

A browser shown in FIG. 10A opens two function tabs (namely, a tab 03 and a tab 04) and a favorites tab 02. An active tab displayed in FIG. 10A is the tab 04, and content displayed on the tab 04 is partial chapters of a novel nov1. A browser shown in FIG. 10B also opens two function tabs (namely, the tab 03 and the tab 04) and the favorites tab 02, an active tab displayed in FIG. 10B is the tab 03, and content displayed on the tab 03 is a video vo1. FIG. 10C shows a schematic diagram of an iframe tag B and an iframe tag C that are in the favorites tab 02 and that respectively correspond to the tab 03 and the tab 04. A browser shown in FIG. 10D also opens two function tabs (namely, the tab 03 and the tab 04) and the favorites tab 02, an active tab displayed in FIG. 10D is the favorites tab 02, and currently displayed content is content on the tab 03 and the tab 04, in other words, the content on the tab 03 and the content on the tab 04 are displayed in parallel on the favorites tab 02. According to some embodiments of this application, FIG. 11 shows a flowchart in which a computer 100 displays the content displayed on the tab 03 and the tab 04 of the browser in parallel on the favorites tab 02 by performing a method for implementing a favorites function of a browser provided in this application. Specifically, refer to FIG. 11, a flowchart in which the computer 100 displays the content displayed on the tab 03 and the tab 04 of the browser in parallel on the favorites tab 02 includes the following steps.

S1101: Detect that a trigger event about adding all content on the tab 03 and the tab 04 of the browser to favorites is generated.

For example, in some embodiments, if the user wants to display the content on both the tab 03 and the tab 04 on the favorites tab 02, the user may tap a favorites control 114 on the current active tab 04, and tap an "add to favorites and currently display" control 122 on a pop-up favorites menu 121, so that the browser generates the trigger event about adding all the content on the tab 04 to favorites. Similarly, the user may tap the tab 03 shown in FIG. 10A by using a mouse, and the browser jumps to the user interface shown in FIG. 10B. The tab 03 becomes a current active tab of the browser. Then, the user may tap a favorites control 114 on the active tab 03, and tap an "add to favorites and currently display" control 122 in a pop-up favorites menu 121, so that the browser generates a trigger event about adding all the content on the tab 03 to favorites.

S1102: Store both a URL of the tab 03 and a URL of the tab 04 in the information sharing unit 221, and store basic parameters corresponding to the tab 03 and the tab 04 in the parameter storage unit 222. The basic parameters of the tab 03 and the tab 04 are respectively names and favorites types of the tab 03 and the tab 04, and parameters such as coordinates, sizes, and names corresponding to the tab 03 and the tab 04 when the tab 03 and the tab 04 are displayed on the favorites tab of the browser.

For example, in some embodiments, the URL of the tab 04 is url2, and the URL of the tab 03 is url3. When detecting the trigger event correspond to the tab 03 and the tab 04 is generated in S1101, the event detection unit 224 of the computer 100 stores both url2 and url3 in the information sharing unit 221 of the computer 100, and stores the parameters such as the favorites types of the tab 03 and the tab 04 in the parameter storage unit 222. It should be understood that, because the user selects the "add to favorites and currently display" on both the tab 03 and the tab 04, the favorites types corresponding to both the tab 03 and the tab 04 are to be added to favorites and currently displayed. In addition, the parameter storage unit 222 may further store the parameters such as the resource names, the coordinates, and the sizes corresponding to the tab 03 and the tab 04, where the parameters of the coordinates and the sizes may be fixed parameters. For example, provided that the trigger event is detected, a corresponding resource to be added to favorites, a favorites type, a resource name and parameters such as default coordinates and a default size are written into the parameter storage unit 222.

S1103: When it is determined that resources corresponding to the tab 03 and the tab 04 need to be displayed on the favorites tab 02, display the content on both the tab 03 and the tab 04 on the favorites tab 02 based on the URL of the tab 03, the URL of the tab 04, and the basic parameters that correspond to the tab 03 and the tab 04 and that are stored in the parameter storage unit 222.

For example, in some embodiments, when the display processing unit 223 of the computer 100 listens to that URLs respectively corresponding to the tab 03 and the tab 04 are added to a collectlist field in the information sharing unit 221, the display processing unit 223 determines, by using a collectstatus field in the information sharing unit 221, that the favorites types of the tab 03 and the tab 04 are: to be added to favorites and currently displayed. In this case, based on the parameters, that are stored in the parameter storage unit 222 such as the coordinates and the sizes of the tab 03 and the tab 04, the iframe tag B corresponding to the tab 03 and the iframe tag C corresponding to the tab 04 are respectively inserted into the favorites tab 02 (html page) shown in FIG. 10C. Then, the URL of the tab 03 and the URL of the tab 04 are respectively written into src of the iframe tag B and src of the iframe tag C, so that the content on the tab 03 and the tab 04 are displayed in parallel on the favorites tab 02 shown in FIG. 10D.

Similarly, in some embodiments, the user may further adjust locations of the tab 03 and the tab 04 that are displayed on the favorites tab 02 shown in FIG. 10D, and perform operations such as zooming in and zooming out on the tab 03 and the tab 04. For details, refer to the related text descriptions of S705 in FIG. 7. Details are not described herein again.

In addition, in some embodiments, the content on the tab 03 and the tab 04 that are displayed in parallel on the favorites tab 02 may be further interacted. For example, it is assumed that a video played on the tab 03 is a TV series that is photographed after being adapted based on a novel on the tab 04, events for a sub-window and a top-layer top window of the iframe tag B and the iframe tag C may be created by using the global event management unit 225 of the computer 100. In this way, communication between the iframe tag B and the iframe tag C is implemented, to implement synchronous display of the video vo1 and the novel nov1 shown in FIG. 10D.

In addition, an embodiment of this application further provides a computer-readable storage medium. The computer-readable storage medium stores a computer program. When the computer program is executed by a processor, steps in the foregoing method embodiments can be implemented.

An embodiment of this application provides a computer program product. When the computer program product runs on an electronic device, the electronic device is enabled to implement the steps in the foregoing method embodiments when executing the computer program product.

An embodiment of this application further provides an electronic device. The electronic device includes: at least one processor, a memory, and a computer program that is stored in the memory and that may be run on the at least one processor. When executing the computer program, the processor implements the steps in any one of the foregoing method embodiments.

Embodiments of a mechanism disclosed in this application may be implemented in hardware, software, firmware, or a combination of these implementations. Embodiments of this application may be implemented as a computer program or program code executed in a programmable system. The programmable system includes at least one processor, a storage system (including a volatile memory, a nonvolatile memory, and/or a storage element), at least one input device, and at least one output device.

The program code may be applied to input instructions to perform the functions described in this application and generate output information. The output information may be applied to one or more output devices in a known manner. For purposes of this application, a processing system includes any system having a processor such as a digital signal processor (Digital Signal Processor, DSP), a micro-controller, an application-specific integrated circuit (Application-Specific Integrated Circuit, ASIC), or a microprocessor.

The program code may be implemented in a high-level programming language or an object-oriented programming language to communicate with the processing system. The program code can also be implemented in an assembly language or a machine language when needed. The mechanisms described in this application are not limited to the scope of any particular programming language. In either case, the language may be a compiled language or an interpreted language.

In some cases, disclosed embodiments may be implemented by hardware, firmware, software, or any combination thereof. Disclosed embodiments may be implemented as instructions carried by or stored thereon by one or more temporary or non-transitory machine-readable (for example, computer-readable) storage media, which may be read and executed by one or more processors. For example, the instructions may be distributed through a network or another computer-readable medium. Therefore, the machine-readable medium may include any mechanism for storing or transmitting information in a machine (for example, a computer)-readable form. The machine-readable medium includes but is not limited to a floppy disk, an compact disc, an optical disc, a read-only memory (CD-ROM), a magneto-optical disc, a read-only memory (Read Only Memory, ROM), a random access memory (Random Access Memory, RAM), an erasable programmable read-only memory (Erasable Programmable Read Only Memory, EPROM), an electrically erasable programmable read-only memory (Electrically Erasable Programmable Read-Only Memory, EEPROM), a magnetic or an optical card, a flash memory, or a tangible machine-readable memory that is configured to transmit information through Internet by using electricity, light, sound or another form of propagating signal (for example, carrier, an infrared signal, or a digital signal). Therefore, the machine-readable medium includes any type of machine-readable medium suitable for storing or transmitting electronic instructions or information in a form that is readable by a machine (for example, a computer).

In the drawings, some structural or method features may be shown in a particular arrangement and/or sequence. However, it should be understood that such a specific arrangement and/or sequence may not be required. Rather, in some embodiments, the features may be arranged in a manner and/or order other than that shown in the illustrative drawings. In addition, the inclusion of structural or method features in a particular figure is not meant to imply that such features are required in all embodiments, and in some embodiments, these features may not be included or may be combined with other features.

It should be noted that: All units/modules mentioned in the device embodiments of this application are logical units/modules. Physically, one logical unit/module may be one physical unit/module, or may be a part of one physical unit/module, or may be implemented through a combination of a plurality of physical units/modules. Physical implementations of these logical units/modules are not the most important, and a combination of functions implemented by these logical units/modules is a key to resolving the technical problem raised in this application. In addition, to highlight an innovative part of this application, the foregoing device embodiments of this application do not introduce a unit/module that is not closely related to resolving the technical problem proposed in this application. This does not indicate that no other unit/module exists in the foregoing device embodiments.

It should be noted that: In the examples and specification of this patent, relational terms such as first and second are merely used to distinguish one entity or operation from another, and do not necessarily require or imply any such actual relationship or order between these entities or operations. In addition, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the existence of additional identical elements in the process, method, article, or device that includes the element.

Although this application has been illustrated and described with reference to some embodiments of this application, it should be understood by a person of ordinary skill in the art that various changes may be made thereto in form and detail without departing from the scope of this application.

## Claims

1. A method for implementing a favorites function of a browser, applied to an electronic device on which the browser is installed, wherein the method comprises:
detecting a favorites selection operation of a user, wherein a favorites object selected by the favorites selection operation is at least partial displayed content on a tab currently displayed on the browser;
storing related data of the at least partial displayed content in response to the favorites selection operation, wherein the related data is used to display the at least partial displayed content; and
displaying a favorites tab in response to a view operation of the user, wherein the at least partial displayed content is displayed on the favorites tab.

2. The method according to claim 1, wherein the storing related data of the at least partial displayed content in response to the favorites selection operation comprises:
in response to the favorites selection operation, determining the related data of the at least partial displayed content that is selected by the user to add to favorites;
storing the related data of the at least partial displayed content as a resource package corresponding to the at least partial displayed content;
determining a storage path of the resource package corresponding to the at least partial displayed content and a name of the resource package; and
storing the storage path of the resource package corresponding to the at least partial displayed content and the name of the resource package.

3. The method according to claim 1 or 2, further comprising:
in response to the favorites selection operation, determining a basic parameter corresponding to the at least partial displayed content that is selected by the user to add to favorites, wherein the basic parameter is for describing a favorites type corresponding to the at least partial displayed content and at least one of location information and size information of the at least partial displayed content when the at least partial displayed content is displayed on the favorites tab; and
storing the basic parameter corresponding to the at least partial displayed content.

4. The method according to claim 3, wherein the basic parameter comprises a favorites type parameter corresponding to the at least partial displayed content; and
the displaying a favorites tab in response to a view operation of the user comprises:
in response to the view operation of the user, obtaining the stored storage path of the resource package corresponding to the at least partial displayed content, the stored name of the resource package, and the stored basic parameter corresponding to the partial displayed content; and
when it is determined, based on the obtained basic parameter corresponding to the partial displayed content, that the partial displayed content needs to be added to favorites and displayed, displaying the favorites tab based on the storage path of the resource package corresponding to the at least partial displayed content, the name of the resource package, and the basic parameter corresponding to the partial displayed content.

5. The method according to claim 4, wherein the basic parameter further comprises a location parameter and a size parameter that correspond to the at least partial displayed content; and
the displaying the favorites tab based on the storage path of the resource package corresponding to the at least partial displayed content, the name of the resource package, and the basic parameter corresponding to the partial displayed content comprises:
determining, based on the basic parameter corresponding to the partial displayed content, a first location and a first size of the at least partial displayed content on the favorites tab when the at least partial displayed content is displayed on the favorites tab;
finding the related data of the at least partial displayed content based on the storage path of the resource package and the name of the resource package; and
displaying the at least partial displayed content at the first location of the favorites tab based on the found related data of the at least partial displayed content, wherein a size of the partial displayed content displayed on the favorites tab is the first size.

6. The method according to claim 5, further comprising:
in response to a movement operation of the user, moving the at least partial displayed content displayed on the favorites tab from the first location to a second location.

7. The method according to claim 5 or 6, further comprising:
in response to a scaling operation of the user, adjusting the at least partial displayed content displayed on the favorites tab from the first size to a second size.

8. The method according to any one of claims 1 to 7, further comprising:
in response to a hiding operation of the user, hiding the at least partial displayed content displayed on the favorites tab.

9. The method according to any one of claims 1 to 8, wherein the related data of the at least partial displayed content comprises:
the at least partial displayed content or a uniform resource locator corresponding to the at least partial displayed content.

10. The method according to claim 9, wherein the related data of the at least partial displayed content further comprises:
a display style file of the at least partial displayed content and/or a script file of the at least partial displayed content, wherein
the display style file of the at least partial displayed content is for describing a display style of the at least partial displayed content on the currently displayed tab; and
the script file of the at least partial displayed content is for describing operation logic of the at least partial displayed content on the currently displayed tab.

11. The method according to any one of claims 1 to 10, wherein the at least partial displayed content comprises one or more of a video, an audio, a picture, and a text.

12. An apparatus for implementing a favorites function of a browser, comprising:
a detecting module, configured to detect a favorites selection operation of a user, wherein a favorites object selected by the favorites selection operation is at least partial displayed content on a tab currently displayed on the browser;
a first response module, configured to store related data of the at least partial displayed content in response to the favorites selection operation, wherein the related data is used to display the at least partial displayed content; and
a second response module, configured to display a favorites tab in response to a view operation of the user, wherein the at least partial displayed content is displayed on the favorites tab.

13. The apparatus according to claim 12, wherein the first response module stores the related data of the at least partial displayed content in response to the favorites selection operation in the following manner:
in response to the favorites selection operation, determining the related data of the at least partial displayed content that is selected by the user to add to favorites;
storing the related data of the at least partial displayed content as a resource package corresponding to the at least partial displayed content;
determining a storage path of the resource package corresponding to the at least partial displayed content and a name of the resource package; and
storing the storage path of the resource package corresponding to the at least partial displayed content and the name of the resource package.

14. The apparatus according to claim 12 or 13, further comprising:
a third response module, configured to: in response to the favorites selection operation, determine a basic parameter corresponding to the at least partial displayed content that is selected by the user to add to favorites, wherein the basic parameter is for describing a favorites type corresponding to the at least partial displayed content and at least one of location information and size information of the at least partial displayed content when the at least partial displayed content is displayed on the favorites tab; and
store the basic parameter corresponding to the at least partial displayed content.

15. The apparatus according to claim 14, wherein the basic parameter comprises a favorites type parameter corresponding to the at least partial displayed content; and
the second response module displays the favorites tab in response to the view operation of the user in the following manner:
in response to the view operation of the user, obtaining the stored storage path of the resource package corresponding to the at least partial displayed content, the stored name of the resource package, and the stored basic parameter corresponding to the partial displayed content; and
when it is determined, based on the obtained basic parameter corresponding to the partial displayed content, that the partial displayed content needs to be added to favorites and displayed, displaying the favorites tab based on the storage path of the resource package corresponding to the at least partial displayed content, the name of the resource package, and the basic parameter corresponding to the partial displayed content.

16. The apparatus according to claim 15, wherein the basic parameter further comprises a location parameter and a size parameter that correspond to the at least partial displayed content; and
the second response module displays the favorites tab based on the storage path of the resource package corresponding to the at least partial displayed content, the name of the resource package, and the basic parameter corresponding to the partial displayed content in the following manner:
determining, based on the basic parameter corresponding to the partial displayed content, a first location and a first size of the at least partial displayed content on the favorites tab when the at least partial displayed content is displayed on the favorites tab;
finding the related data of the at least partial displayed content based on the storage path of the resource package and the name of the resource package; and
displaying the at least partial displayed content at the first location of the favorites tab based on the found related data of the at least partial displayed content, wherein a size of the partial displayed content displayed on the favorites tab is the first size.

17. The apparatus according to claim 16, further comprising:
a fourth response module, configured to: in response to a movement operation of the user, move the at least partial displayed content displayed on the favorites tab from the first location to a second location.

18. The apparatus according to claim 16 or 17, further comprising:
a fifth response module, configured to: in response to a scaling operation of the user, adjust the at least partial displayed content displayed on the favorites tab from the first size to a second size.

19. The apparatus according to any one of claims 12 to 18, further comprising:
a sixth response module, configured to: in response to a hiding operation of the user, hide the at least partial displayed content displayed on the favorites tab.

20. The apparatus according to any one of claims 12 to 19, wherein the related data of the at least partial displayed content comprises:
the at least partial displayed content or a uniform resource locator corresponding to the at least partial displayed content.

21. The apparatus according to claim 20, wherein the related data of the at least partial displayed content further comprises:
a display style file of the at least partial displayed content and/or a script file of the at least partial displayed content, wherein
the display style file of the at least partial displayed content is for describing a display style of the at least partial displayed content on the currently displayed tab; and
the script file of the at least partial displayed content is for describing operation logic of the at least partial displayed content on the currently displayed tab.

22. The apparatus according to any one of claims 12 to 21, wherein the at least partial displayed content comprises one or more of a video, an audio, a picture, and a text.

23. A computer-readable storage medium, wherein the computer-readable storage medium stores instructions, and when the instructions are executed on an electronic device, the electronic device is enabled to perform the method for implementing a favorites function according to any one of claims 1 to 11.

24. A computer program product, wherein the computer program product comprises instructions, and when the instructions are executed by one or more processors, the instructions are used to implement the method for implementing a favorites function according to any one of claims 1 to 11.

25. An electronic device, comprising:
a memory, configured to store instructions; and
one or more processors, wherein when the instructions are executed by the one or more processors, the processor performs the method for implementing a favorites function according to any one of claims 1 to 11.
